# EUROPEAN PATENT APPLICATION

(11) **EP 4 410 896 A1**
(43) Date of publication of application: **07.08.2024**
(21) Application number: 22875787.8
(22) Date of filing: 12.09.2022
(51) Int. Cl.: C08L 81/02, C08G 75/0209, C08J 5/04, C08K 3/013, C08K 5/5435, C08K 5/544, C08K 7/14

(54) **POLYARYLENE SULFIDE RESIN COMPOSITION AND MOLDED ARTICLE**

(30) Priority: 28.09.2021 JP 2021157377
(71) Applicant: Toray Industries, Inc., Tokyo 103-8666 (JP)
(72) Inventor: FUKUYASU, Koki, Nagoya-shi, Aichi 455-8502 (JP); SASAKI, Terasu, Nagoya-shi, Aichi 455-8502 (JP); KONDO, Shunsuke, Nagoya-shi, Aichi 455-8502 (JP); SAITO, Kei, Nagoya-shi, Aichi 455-8502 (JP)
(74) Representative: Mewburn Ellis LLP
(86) International application number: PCT/JP2022/034015
(87) International publication number: WO 2023/053915

(57) **Abstract**

A polyarylene sulfide resin composition comprising: 100 parts by weight of (A) a polyarylene sulfide; and 10 to 200 parts by weight of (B) a glass fiber, wherein, when the cumulative integral value from the molecular weight of 100 to the molecular weight of 10,000 in a molecular weight distribution curve of (A) the polyarylene sulfide is taken as 100, the cumulative integrated value at the molecular weight of 4,000 is 48 to 53, and wherein, when the melt flow rate of the polyarylene sulfide is defined as MFR1, and when the melt flow rate obtained after mixing the polyarylene sulfide with an epoxy silane coupling agent at a weight ratio of 100:1, and heating the resulting mixture at 315.5°C for 5 minutes is defined as MFR2, the rate of change represented by MFR2/MFR1 is not more than 0.085. Provided is a polyarylene sulfide resin composition having excellent mechanical strength and moist heat resistance, and having improved moldability.

## Description

### TECHNICAL FIELD

The present invention relates to a polyarylene sulfide resin composition having excellent mechanical strength and moist heat resistance, and in addition, having improved moldability.

### BACKGROUND ART

A polyarylene sulfide (hereinafter referred to as a PAS for short in some cases) belongs to super engineering plastics having high heat resistance, excels in mechanical strength, stiffness, flame retardance, chemical resistance, electrical properties, dimensional stability, and the like, and hence, is widely used for applications such as various kinds of electrical and electronic parts, home electrical appliance parts, automobile parts, and mechanical parts.

On the other hand, the level of the performance that a PAS needs to have is becoming higher year after year. A PAS now needs to have excellent melt moldability together with the further improvement of mechanical strength and durability.

Patent Document 1 discloses a resin composition containing: a polyarylene sulfide having high reactivity with an epoxy silane coupling agent; a silane-based compound having an epoxy group; and a filler.

Patent Document 2 discloses a polyarylene sulfide resin composition obtained by blending a polyarylene sulfide resin, a glass fiber, and an alkoxysilane compound having an amino group.

### PRIOR ART DOCUMENTS

### Patent Documents

Patent Document 1: JPH06-256517A
Patent Document 2: WO2018-180591

### SUMMARY OF THE INVENTION

### PROBLEMS TO BE SOLVED BY THE INVENTION

Patent Document 1 describes use of a polyarylene sulfide such that, when 1.0% γ-glycidoxypropyltrimethoxysilane is added to the polyarylene sulfide, and the resulting mixture is kneaded at 320°C for 5 minutes, the degree of rise in the melt viscosity is in the range of 4.0 to 12.0. By the use, the resulting product is improved in mechanical properties such as bending strength and impact strength, but has problems in that the improving effect is not sufficient yet, and that the moldability is poor, for example, that the product generates many mold deposits.

According to Patent Document 2, a polyarylene sulfide resin acid-treated is blended with an alkoxysilane compound having an amino group, and the resulting product is made to have an exothermic peak temperature (Tmc) of 195°C to 225°C due to the crystallization, so that the hydraulic fracture strength is improved, but the product still has problems in that the moist heat resistance thereof is not very high, that the melt viscosity thereof is more likely to rise during molding processing, and that the thin-wall moldability thereof is poor.

### MEANS FOR SOLVING THE PROBLEMS

In order to solve the problems described above, the present invention has the following constitution.
(1) A polyarylene sulfide resin composition including: 100 parts by weight of (A) a polyarylene sulfide; and 10 to 200 parts by weight of (B) a glass fiber, wherein, when the cumulative integral value from the molecular weight of 100 to the molecular weight of 10,000 in a molecular weight distribution curve of (A) the polyarylene sulfide is taken as 100, the cumulative integrated value at the molecular weight of 4,000 is 48 to 53, and wherein, when the melt flow rate of (A) the polyarylene sulfide is defined as MFR1, and when the melt flow rate obtained after mixing (A) the polyarylene sulfide with an epoxy silane coupling agent at a weight ratio of 100:1, and heating the resulting mixture at 315.5°C for 5 minutes is defined as MFR2, the rate of change represented by MFR2/MFR1 is not more than 0.085.
(2) The polyarylene sulfide resin composition according to (1), further including 10 to 250 parts by weight of (C) a non-fibrous inorganic filler with respect to 100 parts by weight of (A) the polyarylene sulfide.
(3) The polyarylene sulfide resin composition according to (1) or (2), further including 0.1 to 10 parts by weight of (D) an organic silane coupling agent having at least one functional group selected from the group consisting of an epoxy group, an amino group, and an isocyanate group, with respect to 100 parts by weight of (A) the polyarylene sulfide.
(4) The polyarylene sulfide resin composition according to (3), wherein the functional group of (D) the organic silane coupling agent is an amino group or an isocyanate group.
(5) The polyarylene sulfide resin composition according to any one of (1) to (4), wherein (A) the polyarylene sulfide has a crosslinked structure.
(6) The polyarylene sulfide resin composition according to (5), wherein, when (A) the polyarylene sulfide having a crosslinked structure is dissolved in a 20-fold weight of 1-chloronaphthalene at 250°C over a period of 5 minutes, and subjected to heat pressure filtration through a PTFE membrane filter having a pore size of 1 µm, the amount of the resulting residue is not more than 4.0% by weight.
(7) A molded article composed of the polyarylene sulfide resin composition according to any one of (1) to (6).
(8) The molded article according to (7), wherein the molded article is a fluid piping part through which a fluid containing water as a major component flows.

### EFFECT OF THE INVENTION

The present invention can provide a polyarylene sulfide resin composition the moldability of which is improved because the molded article has excellent mechanical strength and moist heat resistance, and because the resin composition generates less gas (low gasification) during molding, and has excellent flowability (good flowability).

### MODE FOR CARRYING OUT THE INVENTION

Embodiments of the present invention are below described in detail.

### (A) Polyarylene Sulfide

### (1) Chemical Structure and Molecular Weight

The polyarylene sulfide in the present invention is a homopolymer or copolymer containing a repeating unit of the formula -(Ar-S)- as a main constituent unit. Examples of Ar include units represented by the following Formula (A) to Formula (L). Formula (A) is especially preferred.

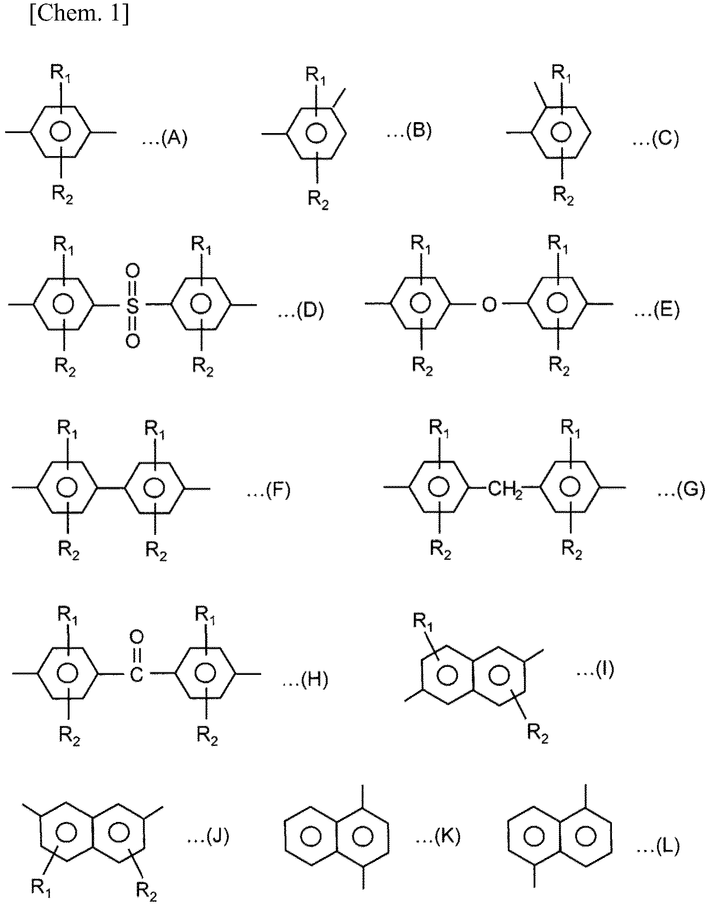

(R₁ and R₂ are substituent groups selected from hydrogen, an alkyl group, an alkoxy group, and a halogen group, and R₁ and R₂ may be the same or different). As long as this repeating unit is contained as a main constituent unit, the polyarylene sulfide may contain a small amount of branch units or crosslink units represented by, for example, the following Formula (M) to Formula (P). The copolymerized amount of these branch units or crosslink units is preferably within the range of 0 mol% to 1 mol% per 1 mole of -(Ar-S)- units.

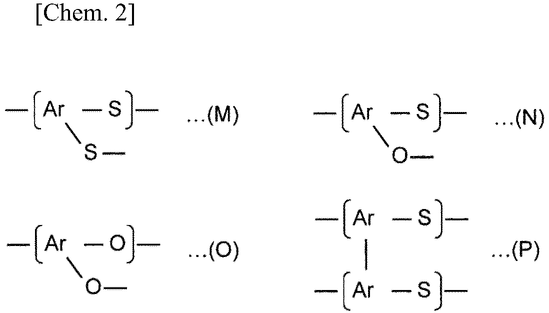

The PAS in the present invention may also be a random copolymer or block copolymer containing the repeating unit, or a mixture of these. Their representative examples include polyarylene sulfide, polyarylene sulfide sulfone, and polyarylene sulfide ketone; random copolymers and block copolymers thereof; and mixtures thereof. Particularly preferred examples of the PAS include polyarylene sulfide, polyarylene sulfide sulfone, and polyarylene sulfide ketone containing the p-arylene unit represented by the following formula at not less than 90 mol% as a main constituent unit of the polymer.

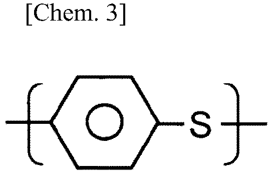

The molecular weights of these PAS's are not limited, and examples of common weight average molecular weights Mw of the PAS's may include 5,000 to 1,000,000, preferably 7,500 to 500,000, more preferably 10,000 to 100,000. Measurement of the molecular weight of a PAS in the present invention is carried out by gel permeation chromatography (GPC), which is a type of size exclusion chromatography (SEC). The melt viscosity, which is known to be correlated with the weight average molecular weight Mw, may be, for example, within the range of 0.1 to 1,000 Pa·s (300°C; shear rate, 1,000/second), preferably within the range of 0.1 to 500 Pa·s, based on the preferred Mw described above. A PAS having a molecular weight and a melt viscosity within the preferred ranges described above tends to have excellent moldability, and to be preferably used in a wide range of uses.

A method of producing a PAS to be used in the present invention is described below. First, a sulfidating agent, a dihalogenated aromatic compound, and an organic polar solvent that are to be used and water present in a system are described.

### (2) Sulfidating Agent

The sulfidating agent used in the present invention is not limited as long as it is an agent capable of introducing a sulfide bond to a dihalogenated aromatic compound. Examples of the sulfidating agent include alkali metal sulfides and alkali metal hydrosulfides. Specific examples of the alkali metal sulfides include sodium sulfide, potassium sulfide, lithium sulfide, rubidium sulfide, and cesium sulfide. Sodium sulfide is especially preferably used. These alkali metal sulfides may be used as a hydrate or a mixture with water, or in the form of an anhydride.

Specific examples of the alkali metal hydrosulfides include sodium hydrosulfide, potassium hydrosulfide, lithium hydrosulfide, rubidium hydrosulfide, and cesium hydrosulfide. Sodium hydrosulfide is especially preferably used. These alkali metal hydrosulfides may be used as a hydrate or a mixture with water, or in the form of an anhydride.

The sulfidating agent may be used in combination with an alkali metal hydroxide and/or alkaline earth metal hydroxide. Specific examples of the alkali metal hydroxide include sodium hydroxide, potassium hydroxide, lithium hydroxide, rubidium hydroxide, and cesium hydroxide. Specific examples of the alkaline earth metal hydroxide include calcium hydroxide, strontium hydroxide, and barium hydroxide. Sodium hydroxide is especially preferably used.

In cases where an alkali metal hydrosulfide is used as the sulfidating agent, it is especially preferably used at the same time as an alkali metal hydroxide. The amount of the alkali metal hydroxide used per 1 mole of the alkali metal hydrosulfide may be, for example, preferably within the range of 0.95 moles to 1.20 moles, more preferably within the range of 1.00 mole to 1.15 moles, still more preferably within the range of 1.005 moles to 1.100 moles. Although the sulfidating agent may be introduced at any timing in the system, the agent is preferably introduced before carrying out the later-mentioned dehydration operation.

### (3) Dihalogenated Aromatic Compound

The dihalogenated aromatic compound used in the present invention means a compound containing an aromatic ring, having two halogen atoms in one molecule, and having a molecular weight of not more than 1,000. Specific examples of the dihalogenated aromatic compound include benzene dihalogenated such as *p-*dichlorobenzene, m-dichlorobenzene, o-dichlorobenzene, p-dibromobenzene, m-dibromobenzene, o-dibromobenzene, 1-bromo-4-chlorobenzene, and 1-bromo-3-chlorobenzene; benzene dihalogenated also containing a substituent group other than halogens, such as 1-methoxy-2,5-dichlorobenzene, 1-methyl-2,5-dichlorobenzene, 1,4-dimethyl-2,5-dichlorobenzene, 1,3-dimethyl-2,5-dichlorobenzene, and 3,5-dichlorobenzoic acid; and dihalogenated aromatic compounds such as 1,4-dichloronaphthalene, 1,5-dichloronaphthalene, 4,4'-dichlorobiphenyl, 4,4'-dichlorodiphenyl ether, 4,4'-dichlorodiphenyl sulfone, and 4,4'-dichlorodiphenyl ketone. In particular, dihalogenated aromatic compounds containing a benzene *p-*dihalogenated represented by *p*-dichlorobenzene as a major component are preferred. The dihalogenated aromatic compound especially preferably contains 80 to 100 mol% p-dichlorobenzene, still especially preferably contains 90 to 100 mol% *p-*dichlorobenzene. For the production of a PAS copolymer, two or more kinds of different dihalogenated aromatic compounds may be used in combination.

The amount of the dihalogenated aromatic compound used per 1 mole of sulfur of the sulfidating agent may be, for example, preferably 0.1 moles to 3 moles, more preferably 0.5 moles to 2 moles, still more preferably 0.9 moles to 1.2 moles. In cases where the amount of the dihalogenated aromatic compound used is within the preferred range described above, the molecular weight of the PAS can be easily controlled to within the preferred range in the present invention, and a PAS in which the amount of chloroform-extractable components is small can be obtained.

Although the dihalogenated aromatic compound may be introduced in the system at any timing, it is preferably introduced after carrying out the later-mentioned dehydration operation. The method of adding the compound is not limited to the addition of the whole amount all at once. A method in which the compound is introduced step by step may also be employed.

### (4) Organic Polar Solvent

In the present invention, an organic polar solvent is used as a reaction solvent. An organic amide solvent having stable reactivity is especially preferably used. Specific examples of the organic polar solvent include *N-*alkylpyrrolidones such as *N*-methyl-2-pyrrolidone, *N*-ethyl-2-pyrrolidone, and *N*-cyclohexyl-2-pyrrolidone; caprolactams such as *N*-methyl-ε-caprolactam; and aprotic organic solvents represented by 1,3-dimethyl-2-imidazolidinone, *N,N*-dimethylacetamide, *N,N-*dimethylformamide, hexamethylphosphoric acid triamide, dimethyl sulfone, and tetramethylene sulfoxide; and mixtures of these. *N*-methyl-2-pyrrolidone is especially preferably used.

Regarding the amount of the organic polar solvent used in the present invention, the amount of the organic polar solvent in the reaction system per 1 mole of sulfur of the sulfidating agent may be, for example, preferably within the range of 0.5 moles to 10 moles, more preferably within the range of 2 moles to 8 moles. In cases where the amount of the organic polar solvent is within the preferred range described above, there is a tendency that unfavorable reactions hardly occur, and hence that the degree of polymerization can be easily increased. The amount of the organic polar solvent in the reaction system herein is the amount calculated by subtracting the amount of the organic polar solvent removed to the outside of the reaction system, from the amount of the organic polar solvent introduced in the reaction system. The organic polar solvent may be introduced in the system at any timing. However, in cases where the later-mentioned dehydration operation is carried out, part of the organic polar solvent tends to fly away to the outside of the system. Therefore, a method in which the minimum amount of the organic polar solvent required for the dehydration is introduced before the dehydration operation, and the organic polar solvent is additionally introduced after the completion of the dehydration operation such that the preferred amount of use is achieved, is preferably employed.

### (5) Water

The water in the present invention means the water directly added when the raw materials are added, the accompanying water introduced together with the sulfidating agent, the dihalogenated aromatic compound, and the organic polar solvent, the water produced during the reaction, and the like. The amount of water present in the system at the start of the reaction is defined as the amount calculated by subtracting the water distilled off to the outside of the system by the dehydration operation, from the total of the waters described above. The presence of water in the present invention has an effect that increases solubility of the sulfidating agent in the organic polar solvent, thereby contributing to reaction promotion. On the other hand, excessive water has an effect that decreases nucleophilicity of the sulfidating agent to cause reaction delay, or to increase the pressure in the system. Therefore, it is important to control the amount of water present in the system to within a preferred range.

Regarding the lower limit of the preferred range of the amount of water present in the system at the start of the reaction, the amount of water per 1 mole of sulfur of the sulfidating agent is preferably as close to 0 moles as possible. From the viewpoint of the practical lower limit for carrying out the present invention, the amount of water may be, for example, not less than 0.01 moles per 1 mole of sulfur of the sulfidating agent. Regarding the upper limit, the amount of water may be, for example, preferably not more than 2.5 moles, more preferably not more than 2.0 moles. In cases where the amount of water at the start of the reaction is within the preferred range described above, the reaction rate tends to be high, and by-products tend to be suppressed. Further, there is a tendency that a pressure increase in the system can be further suppressed, and hence that the cost of introduction of an equipment with high pressure resistance can be reduced.

In the present invention, in cases where the amount of water at the start of the reaction exceeds the preferred amount of water described above, the amount of water can be adjusted by carrying out an operation for reducing the amount of water in the reaction system by dehydration operation. The method of carrying out the dehydration operation is not limited. Examples of the method that may be employed include a method in which the raw materials to be charged are preliminarily dehydrated, a method in which a mixture to which one or more components selected from the sulfidating agent, the dihalogenated aromatic compound, and the organic polar solvent are not added is dehydrated, and a method in which a mixture containing the sulfidating agent, the dihalogenated aromatic compound, and the organic polar solvent is dehydrated after the preparation of the mixture. Although any of these methods may be employed, it is preferred to employ a method in which a mixture to which the dihalogenated aromatic compound is not added is subjected to dehydration operation from the viewpoint of accurately controlling the amount of the dihalogenated aromatic compound, which is likely to fly away due to heating. The temperature for heating the mixture at this time cannot be clearly specified since it may largely vary depending on the combination of the sulfidating agent and the organic polar solvent used, the ratio of the mixture to water, and the like. Regarding the lower limit, the temperature may be, for example, not less than 150°C, preferably not less than 160°C, more preferably not less than 170°C. Regarding the upper limit, the temperature may be, for example, not more than 250°C, preferably not more than 230°C. In cases where the heating temperature during the dehydration is within the preferred range described above, the dehydration can be efficiently carried out while suppressing flying away of the added sulfidating agent to the outside of the system as hydrogen sulfide. The pressure condition during the dehydration is also not limited, and any of normal pressure, decompression pressure, and pressurized pressure may be employed. For efficient distillation of water, the dehydration is preferably carried out under normal pressure or decompression pressure. The normal pressure herein means a pressure close to the pressure in the standard state of the atmosphere, that is, an atmospheric pressure condition at a temperature of about 25°C at an absolute pressure of about 101 kPa. The atmosphere in the system is preferably a non-oxidizing atmosphere, and is preferably an atmosphere of an inert gas such as nitrogen, helium, or argon. From the viewpoint of economical efficiency and ease of handling, the dehydration is more preferably carried out under nitrogen atmosphere.

### (6) Method of Producing Polyarylene Sulfide

In the present invention, it is preferable that a PAS is produced by reacting a mixture containing at least a sulfidating agent, a dihalogenated aromatic compound, and an organic polar solvent under heat, and that, after the end of the reaction for producing the PAS, the following Steps 1, 2, 3 and 4 are carried out to obtain a PAS.

Step 1: A step in which the organic polar solvent is distilled off from the reaction mixture obtained at the end of the reaction, to obtain a solid content containing the PAS.

Step 2: A step which follows Step 1, wherein the solid content containing the PAS is washed with water.

Step 3: A step which follows Step 2, wherein the PAS is washed with an organic solvent such that the amount of chloroform-extractable components in the PAS becomes not more than 1.7% by weight.

Step 4: A step which follows Step 3, wherein the PAS is heated under a flow of an inert gas at a flow rate of not less than 0.2 L/minute per 1 kg of the PAS, to distill off the organic solvent used in Step 3.

These are described below in detail.

### (6-1) Chloroform-Extractable Components

The chloroform-extractable components in the present invention means mainly oligomer components contained in the PAS, which oligomer components are composed of cyclic PAS and linear PAS oligomers. The ratios of these components are not limited.

Here, the cyclic PAS is a cyclic compound containing a repeating unit of the formula -(Ar-S)- as a main constituent unit, and is preferably a compound containing the repeating unit at not less than 80 mol%, such as the following General Formula (Q).

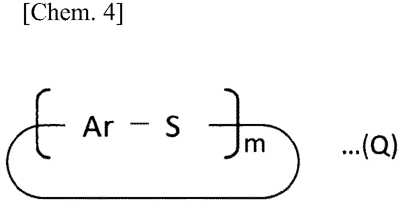

Here, examples of Ar may include units represented by the Formula (A) to Formula (L) described above, similarly to the case of the PAS. Formula (A) is especially preferred.

The cyclic PAS may contain repeating units such as the Formula (A) to Formula (L) described above randomly or in blocks, or may be any mixture thereof. Their representative examples may include cyclic polyarylene sulfide, cyclic polyarylene sulfide sulfone, and cyclic polyarylene sulfide ketone; cyclic random copolymers and cyclic block copolymers containing these; and mixtures thereof. Particularly preferred examples of the cyclic PAS include a cyclic polyarylene sulfide (hereinafter referred to as a cyclic PAS for short in some cases) containing the *p-*arylene sulfide unit represented by the following formula at not less than 80 mol%, especially at not less than 90 mol% as a main constituent unit.

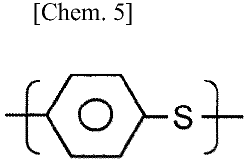

In the cyclic PAS, the number of repetitions m in the Formula (Q) is not limited, and it may be, for example, preferably within the range of 2 to 50, more preferably within the range of 3 to 40, still more preferably within the range of 4 to 30. The cyclic PAS may be either a single compound having a single number of repetitions, or a mixture of cyclic PAS's having different numbers of repetitions. A mixture of cyclic PAS's having different numbers of repetitions is more often obtained.

The linear PAS oligomer is a linear oligomer containing a repeating unit of the formula -(Ar-S)- as a main constituent unit, wherein Ar is the same as the structure described above in the section of (A) Polyarylene Sulfide. The number of repetitions of the main constituent unit of the linear PAS oligomer is not limited. In the chloroform-extractable components, the number of repetitions may be, for example, preferably within the range of 2 to 20, more preferably within the range of 2 to 10. The linear PAS oligomer may be either a single compound having a single number of repetitions, or a mixture of linear PAS oligomers having different numbers of repetitions. A mixture of linear PAS oligomers having different numbers of repetitions is more often obtained.

In the present invention, it is preferable to use a PAS that generates less mold deposits, by reducing oligomer components having relatively low volatility (high boiling points) that are adhered and deposited on the mold during molding. Such oligomer components have been found to almost correspond to the chloroform-extractable components. Accordingly, it is preferable to remove and reduce the chloroform-extractable components in the PAS. The smaller the amount of chloroform-extractable components in the PAS, the more the mold deposits during molding decrease. It was found that, by reducing the amount of chloroform-extractable components in the PAS to not more than 1.7% by weight, the mold deposits during molding tend to be improved. Accordingly, it is preferable in the present invention that, in the later-mentioned Step 3, the PAS is washed with an organic solvent to reduce the amount of chloroform-extractable components in the PAS to not more than 1.7% by weight. Regarding the lower limit of the amount of chloroform-extractable components in the PAS, the smaller the amount of such components, the more preferred from the viewpoint of reducing the mold deposits. Thus, the chloroform-extractable components are most preferably not contained in the PAS at all. In other words, the amount is most preferably 0% by weight. On the other hand, regarding the upper limit, the amount is preferably not more than 1.2% by weight, more preferably not more than 1.0% by weight. In cases where the amount of chloroform-extractable components in the PAS is within the preferred range described above, the mold deposits during molding of the PAS tend to be more clearly improved.

The amount of chloroform-extractable components in the PAS in the present invention is herein calculated by weighing 10 g of PAS, subjecting the PAS to soxhlet extraction with 100 g of chloroform for 3 hours, distilling away chloroform from the resulting extract, weighing the component obtained thereafter, and then calculating its ratio to the weight of the charged polymer.

As described above, in the present invention, the smaller the amount of chloroform-extractable components in the PAS, the more preferred from the viewpoint of reducing the mold deposits during molding of the PAS. On the other hand, chloroform-extractable components in a PAS, when they are present in various resins, are known to show an effect that makes it easier to flow when melting, to thereby decrease the melt viscosity. Therefore, in cases where importance is placed on such an effect, the existence of a certain amount of chloroform-extractable components in the PAS may be acceptable. Cyclic PAS's, because of their cyclicity, are known to have a potential for practical application to high-performance materials and functional materials. For example, they are known to have properties as compounds having an inclusive nature, and to be applicable in various ways as monomers effective for synthesis of high-molecular-weight linear polymers. Therefore, since the chloroform-extractable components removed and recovered from the PAS can be applied, when necessary, to other uses after the separation and recovery of the cyclic PAS, rather than being simply discarded as unnecessary substances. In view of this, such application can be said to be an industrially preferred method.

### (6-2) Generation of PAS

In the present invention, a mixture containing at least a sulfidating agent, a dihalogenated aromatic compound, and an organic polar solvent is reacted under heat to generate a PAS.

The temperature at which the mixture is heated to allow the reaction to proceed in the present invention cannot be generally specified since it depends on the types and the amounts of the raw materials used. Regarding the lower limit, the temperature may be, for example, not less than 120°C, preferably not less than 180°C, more preferably not less than 220°C, still more preferably not less than 240°C. On the other hand, regarding the upper limit of the range, the temperature may be, for example, not more than 350°C, preferably not more than 320°C, more preferably not more than 310°C, still more preferably not more than 300°C. In cases where the temperature at which the mixture is heated to allow the reaction to proceed is within the preferred range described above, a PAS showing normal physical properties can be more efficiently obtained.

Here, in cases where the temperature at which the mixture is heated to allow the reaction to proceed exceeds the reflux temperature of the mixture under normal pressure, examples of the method of heating the mixture at such a temperature may include a method in which the mixture is heated under a pressure higher than normal pressure, and a method in which the mixture is placed in a pressure resistant container followed by sealing the container and heating the mixture. The normal pressure means a pressure close to the standard state of the atmosphere, and the standard state of the atmosphere means an atmospheric pressure condition at a temperature of about 25°C at an absolute pressure of about 101 kPa. The reflux temperature means the temperature at which the liquid component of the mixture repeats boiling and condensation. The reaction in the present invention may be any of a reaction that is carried out at a constant temperature, a multi-step reaction in which the temperature is increased step by step, and a reaction in the form in which the temperature is continuously changed.

The length of time of heating the mixture to allow the reaction to proceed cannot be generally specified since it depends on the types and the amounts of the raw materials used, and the reaction temperature. Regarding the lower limit, the length of time may be, for example, preferably not less than 0.5 hours, more preferably not less than 1 hour. Regarding the upper limit, the length of time may be, for example, preferably not more than 20 hours, more preferably not more than 10 hours. In cases where the length of time of heating the mixture to allow the reaction to proceed is within the preferred range described above, the raw materials can be sufficiently consumed in the reaction, and a PAS can be efficiently produced in a shorter length of time.

The pressure in the reaction system cannot be generally specified since it depends on the raw materials constituting the mixture, the composition, the reaction temperature, and the progress of the reaction. In a preferred embodiment of the present invention, regarding the lower limit of the pressure at the reaction temperature in the present invention, the gauge pressure may be, for example, preferably not less than 0.25 MPa, more preferably not less than 0.3 MPa. Regarding the upper limit, the gauge pressure may be, for example, preferably not more than 5 MPa, more preferably not more than 3 MPa, still more preferably not more than 2 MPa. In cases where the pressure in the reaction system is within the preferred range described above, the sulfidating agent and the dihalogenated aromatic compound as raw materials tend to be quickly consumed in the reaction, and there is a tendency that use of an expensive pressure-resistant equipment can be avoided. Here, in order to adjust the pressure in the reaction system to within the preferred range described above, the inside of the reaction system may be pressurized by an inert gas in an optional stage such as a stage before the start of the reaction or during the reaction, preferably before the start of the reaction. The gauge pressure means the relative pressure calculated using the atmospheric pressure as the standard, and has the same meaning as the pressure difference calculated by subtracting the atmospheric pressure from the absolute pressure.

In the present invention, it is preferable that, for generating a PAS, a mixture containing at least a sulfidating agent, a dihalogenated aromatic compound, and an organic polar solvent is reacted under heat, and, after the end of this reaction, the later-mentioned Step 1 is carried out. The "end of reaction" in the present invention means a state where the reaction has proceeded until the conversion rate of the dihalogenated aromatic compound added has become not less than 97%. By reacting the dihalogenated aromatic compound to such a conversion rate, and then carrying out the later-mentioned Step 1, the amount of chloroform-extractable components in the obtained PAS can be reduced. In the present invention, the reaction is regarded as having ended at the time point when the conversion rate of the dihalogenated aromatic compound has become not less than 97%. However, a method in which the conversion rate of the dihalogenated aromatic compound is further increased by further continuation of the reaction is also preferably employed. In this case, regarding the lower limit of a more preferred range of the conversion rate of the dihalogenated aromatic compound in the reaction, the conversion rate may be, for example, more preferably not less than 98%, still more preferably not less than 98.5%. On the other hand, the upper limit cannot be generally specified since the rate may exceed 100% in accordance with the calculation equation below, and since the rate may vary depending on the amount of the dihalogenated aromatic compound used. It can be said, however, that the preferred upper limit is the conversion rate obtained in the case where the entire dihalogenated aromatic compound used is converted. In cases where the conversion rate of the dihalogenated aromatic compound is within the preferred range described above, the amount of chloroform-extractable components in the obtained PAS tends to further decrease. In the present invention, the amount of the dihalogenated aromatic compound remaining in the reaction solution is estimated by gas chromatography, and the conversion rate of the dihalogenated aromatic compound is calculated from its ratio to the amount of the sulfidating agent added or the dihalogenated aromatic compound added. The calculation equation is as follows.
(a) In cases where the dihalogenated aromatic compound is used in excess in terms of the molar ratio relative to the sulfidating agent Conversion rate of dihalogenated aromatic compound (%) = [amount of dihalogenated aromatic compound added (in moles) - amount of remainig dihalogenated aromatic compound (in moles)] / amount of sulfidating agent added (in moles) × 100
(b) In cases other than the above (a) Conversion rate of dihalogenated aromatic compound (%) = [amount of dihalogenated aromatic compound added (in moles) - amount of remaining dihalogenated aromatic compound (in moles)] / amount of dihalogenated aromatic compound (in moles) × 100

The amount of the sulfidating agent added herein means the amount of the sulfidating agent present in the system at the start of the reaction. In cases where part of the sulfidating agent is removed as hydrogen sulfide to the outside of the system by the dehydration operation before the start of the reaction, the amount of the sulfidating agent present in the system at the start of the reaction is estimated taking into account the number of moles of the hydrogen sulfide that has flown away.

The amount of the dihalogenated aromatic compound added means the amount of the dihalogenated aromatic compound present in the system at the start of the reaction. In cases where the part of the dihalogenated aromatic compound is removed to the outside of the system by the dehydration operation before the start of the reaction, the amount of the dihalogenated aromatic compound present in the system at the start of the reaction is estimated taking into account the number of moles of the dihalogenated aromatic compound that has flown away.

### (6-3) Step 1

Step 1 in the present invention is a step of distilling off the organic polar solvent from the reaction mixture obtained by the reaction for generating the PAS, to obtain a solid content containing the PAS. The solid content obtained by this operation contains not only the PAS, but also water-soluble substances such as by-product salt and unreacted sulfidating agent. By this operation, the organic polar solvent can be simply recovered, and there is therefore a tendency that the cost of the production of the PAS can be suppressed.

The method of distilling off the organic polar solvent from the reaction mixture to obtain the solid content containing the PAS is not limited. Examples of the method may include a method in which the obtained reaction mixture is heated to not less than the boiling point of the organic polar solvent to distill off the organic polar solvent, and a method in which the reaction mixture is heated in a sealed state using a pressure-resistant reactor comprising an extraction port at the bottom of the container, and then the reaction mixture, which has been heated to not less than the temperature corresponding to the boiling point under normal pressure, is extracted by opening the extraction port at the bottom of the container into an atmosphere under normal pressure or decompression pressure, to thereby allow instant vaporization of the organic polar solvent (flash method).

The temperature at which the organic polar solvent is distilled off in Step 1 is not limited as long as it is not less than the boiling point of the organic polar solvent used. Regarding the lower limit, the temperature may be, for example, preferably not less than 200°C, more preferably not less than 220°C, still more preferably over 220°C. On the other hand, regarding the upper limit, the temperature may be, for example, preferably not more than 250°C, more preferably not more than 240°C. In cases where the temperature at which the organic polar solvent is distilled off in Step 1 is within the preferred range described above, there is a tendency that the distilling off of the organic polar solvent can be completed in a relatively short time. Further, since fusion of the generated PAS particles to each other can be prevented, there is a tendency that formation of large clusters by the solid content obtained after the flashing can be prevented, leading to formation of powdery granules that can be easily handled. Further, the specific surface area of the obtained PAS particles tends to increase, and there is a tendency that, when the PAS is washed with an organic solvent in the later-mentioned Step 3, the amount of chloroform-extractable components in the PAS can be more easily reduced due to this effect. Here, the temperature at which the organic polar solvent is distilled off in Step 1 means the internal temperature rather than the temperature of the container.

In the case where the organic polar solvent is distilled off by heating the reaction mixture to not less than the boiling point of the organic polar solvent, any of normal pressure, decompression pressure, and pressurized pressure is preferably employed as the pressure condition. It is preferred to employ a decompression pressure condition. Under such a preferred pressure condition, the distillation speed of the organic polar solvent can be increased, and there is a tendency that an additional effect that allows removal of oligomer components and other volatile impurities as well as the organic polar solvent can be obtained.

Also in the case where the flash method described above is employed, the conditions are not limited. Examples of the method under preferred conditions may include a method in which a reaction mixture under high-temperature high-pressure conditions, usually at not less than 250°C and not less than 0.8 MPa, is released in a gas stream of high-temperature high-pressure steam controlled to about 290°C and 5 kg/cm² to 20 kg/cm², which gas stream is allowed to flow at a flow rate of 50 kg/hr to 5,000 kg/hr. The supply speed of the reaction mixture in this process is preferably within the range of 0.5 kg/hr to 5,000 kg/hr. In such a preferred method, there is a tendency that oligomer components and other volatile impurities accompanying the steam can be efficiently removed, and that formation of large clusters by the solid content obtained after the flashing can be prevented, leading to formation of powdery granules that can be easily handled.

The temperature of the container from which the reaction mixture is extracted in the flash method is not limited as long as it is not less than the boiling point of the employed organic polar solvent at normal pressure. Regarding the lower limit, the temperature may be, for example, preferably not less than 200°C, more preferably not less than 220°C. On the other hand, regarding the upper limit, the temperature may be, for example, preferably not more than 250°C, more preferably not more than 240°C. In cases where the temperature of the container from which the reaction mixture is extracted in the flash method is within the preferred range described above, there is a tendency that the distilling off of the organic polar solvent can be completed in a relatively short time, that fusion of the generated PAS particles to each other can be prevented, and that formation of large clusters by the solid content obtained after the flashing can be prevented, leading to formation of powdery granules that can be easily handled. Further, the specific surface area of the obtained PAS particles tends to increase, and there is a tendency that, when the PAS is washed with an organic solvent in the later-mentioned Step 3, the amount of chloroform-extractable components in the PAS can be more easily reduced due to this effect.

As described above, in Step 1, a solid content containing the PAS is obtained by distilling off the organic polar solvent from the reaction mixture obtained by the reaction. One excellent characteristic of this operation is that the organic polar solvent can be recovered at low cost. Since the obtained reaction mixture contains water-soluble substances such as by-product salt and unreacted sulfidating agent as well as the PAS, washing with water needs to be carried out to a considerable degree in the process of recovery of the PAS. The filtrate generated in this process often contains all of water, water-soluble substances, and the organic polar solvent. In cases where the organic polar solvent is recovered from such a filtrate by a distillation operation or the like, a high cost tends to be required since water is a substance having large evaporation latent heat. Therefore, the production cost of the PAS tends to remarkably increase as a result. In the present invention, the above cases can be avoided by recovering the organic polar solvent first, so that the PAS can be produced at low cost.

### (6-4) Step 2

Step 2 in the present invention is a step following Step 1. In this step, the solid content containing the PAS is washed with water to remove water-soluble substances. The solid content obtained after distilling off the organic polar solvent in Step 1 contains not only the PAS, but also water-soluble substances such as by-product salt and unreacted sulfidating agent. Therefore, by carrying out washing with water in the following step, Step 2, those water-soluble substances are removed.

The method of removing the water-soluble substances by washing the solid content containing the PAS with water is not limited. Examples of the method may include a method in which water is added to the solid content containing the PAS, and the resulting mixture is slurried, followed by carrying out solid-liquid separation by an operation such as filtration or centrifugation, and then separating and recovering the PAS as a solid content, to remove the water-soluble substances into the filtrate side, and a method in which the PAS is spread on a filter medium and then washed in the shower of water. The slurrying operation described above is preferably carried out with stirring from the viewpoint of efficiently removing the water-soluble substances.

When the water-soluble substances are removed by washing the solid content containing the PAS with water, the bath ratio (weight bath ratio) of the amount of water to the amount of the PAS is not limited. Regarding the lower limit, the bath ratio to the PAS weight may be, for example, not less than 1, preferably not less than 2, more preferably not less than 3. On the other hand, regarding the upper limit, the bath ratio to the PAS weight may be, for example, not more than 100, preferably not more than 50, more preferably not more than 20. In cases where the bath ratio for the removal of the water-soluble substances by washing of the solid content containing the PAS with water is within the preferred range described above, there is a tendency that the water-soluble substances can be efficiently removed. Further, when the solid-liquid separation is carried out by an operation such as filtration or centrifugation after the slurrying, the length of time required for the process tends to be short.

The temperature for the removal of the water-soluble substances by washing of the solid content containing the PAS with water (slurry temperature) is not limited. Regarding the lower limit, the temperature may be, for example, not less than 0°C, preferably not less than 100°C, more preferably not less than 150°C, still more preferably not less than 170°C, still more preferably not less than 180°C. On the other hand, regarding the upper limit, the temperature may be, for example, not more than 250°C, preferably not more than 220°C, more preferably not more than 200°C. In cases where the temperature for the removal of the water-soluble substances by washing of the PAS with water is within the preferred range described above, the internal pressure of the apparatus tends not to excessively increase, and there is a tendency that the water-soluble substances embraced in the PAS particles can be efficiently extracted. The method of increasing the temperature to not less than the boiling point of water is not limited, and may be, for example, a method in which the PAS and water are placed in a pressure resistant container, and the resulting mixture is slurried, followed by sealing the container and heating the mixture.

The stirring time for the removal of the water-soluble substances by washing of the solid content containing the PAS with water is not limited. Regarding the lower limit, the stirring time may be, for example, not less than 0.1 minutes, preferably not less than 1 minute. Regarding the upper limit, the stirring time may be, for example, not more than 3 hours, preferably not more than 1 hour. In cases where the stirring time for the removal of the water-soluble substances by washing of the PAS with water is within the preferred range described above, there is a tendency that the water-soluble substances contained in the PAS can be efficiently extracted.

When the solid content containing the PAS is slurried with water, and then the solid-liquid separation is carried out by the operation such as filtration or centrifugation, the temperature in the solid-liquid separation apparatus is also not limited. Regarding the lower limit, the temperature may be, for example, not less than 0°C, preferably not less than 20°C, more preferably not less than 50°C. On the other hand, regarding the upper limit, the temperature may be, for example, not more than 100°C. In cases where the temperature in the solid-liquid separation apparatus is within the preferred range described above, the solid-liquid separation operation can be carried out using a simple apparatus without being affected by the boiling point or melting point of water at normal pressure.

The number of times of the operation of removing the water-soluble substances by washing of the solid content containing the PAS with water is also not limited. In cases where the operation is carried out only once, the water-soluble substances derived from the mother liquid in the solid content obtained after the separation tend to remain, so that the washing operation is preferably carried out two or more times. By carrying out the washing operation a plurality of times like this, further removal of the water-soluble substances is possible.

The atmosphere during the removal of the water-soluble substances by washing the solid content containing the PAS with water is not limited, and the removal may be carried out in the air without any problem. However, from the viewpoint of preventing degradation or oxidation of end groups, this operation is preferably carried out in a non-oxidizing atmosphere. In this case, the atmosphere is preferably an atmosphere of an inert gas such as nitrogen, helium, or argon. From the viewpoint of economical efficiency and ease of handling, the operation is more preferably carried out under nitrogen atmosphere.

In the washing of the solid content containing the PAS with water, a method in which an acid is added to the water used is also preferably employed since the metal content in the PAS tends to decrease in this case. The acid added is not limited as long as it does not show an action that causes oxidation, degradation, or deterioration of the PAS. Either an inorganic acid or an organic acid may be used. In this case, the acid washing is preferably carried out under conditions where the slurry pH during the acid washing is less than 7. The pH is controlled by adjusting the type of the acid selected from inorganic acids and organic acids, and the amount of the acid added. Examples of the acid added include acetic acid, hydrochloric acid, dilute sulfuric acid, phosphoric acid, silicic acid, carbonated water, and propyl acid. These acids may be used individually or as a mixture. In particular, from the viewpoint of the cost, acetic acid or hydrochloric acid is preferably used. After carrying out the washing with the water containing the acid, it is preferred to additionally carry out washing with ordinary water at least one or more times to prevent the added acid from remaining in the PAS.

The washing of the PAS with the water containing the acid is preferably carried out in an inert atmosphere in order to prevent degradation or oxidation of end groups of the PAS.

In Step 2, the PAS becomes under wet conditions after the washing with water. Thereafter, the PAS may be subjected to drying. Since water is a poor solvent of the chloroform-extractable components in the PAS, the drying of the PAS in Step 2 tends to lead to an increased washing effect in the washing of the PAS with an organic solvent in the subsequent Step 3. In cases where the organic solvent used in Step 3 is water-insoluble, the washing effect tends not to change irrespective of whether the PAS is under dry conditions or wet conditions. Therefore, the PAS does not necessarily need to be dried in Step 2.

In cases where the drying is carried out after the washing of the PAS with water in Step 2, fusion of PAS particles tends to occur in cases where the drying temperature is too high, leading to a smaller specific surface area. In such cases, there is a tendency that a sufficient washing effect cannot be produced in the later-mentioned Step 3. Therefore, regarding the lower limit, the drying temperature may be, for example, preferably not less than 70°C, more preferably not less than 100°C, still more preferably not less than 120°C. Regarding the upper limit, the drying temperature may be, for example, preferably not more than 170°C, more preferably not more than 150°C. In cases where the drying temperature for the PAS is within the preferred range described above, the specific surface area of the PAS after the drying tends to be sufficiently large, so that there is a tendency that the chloroform-extractable components in the PAS can be sufficiently removed by washing in the later-mentioned Step 3. Further, there is a tendency that the PAS can be efficiently dried in a short time. The atmosphere for the drying is preferably a non-oxidizing atmosphere, and preferably an atmosphere of an inert gas such as nitrogen, helium, or argon. From the viewpoint of economical efficiency and ease of handling, the drying is more preferably carried out under nitrogen atmosphere. There is a tendency that, by drying the PAS in such an atmosphere, degeneration of the PAS due to oxidation can be prevented.

In cases where the PAS is dried after the washing with water in Step 2, the drying time is not limited. Regarding the lower limit, the drying time may be, for example, not less than 0.5 hours, preferably not less than 1 hour. Regarding the upper limit, the drying time may be, for example, not more than 50 hours, preferably not more than 20 hours, more preferably not more than 10 hours. In cases where the drying time for the PAS is within the preferred range described above, the PAS can be efficiently industrially produced.

Here, in cases where the PAS is dried after the washing with water in Step 2, the dryer used is not limited. A common vacuum dryer or hot air dryer may be used. A revolver-type heating apparatus or a heating apparatus equipped with a stirring blade, a fluidized bed dryer, or the like may also be used. From the viewpoint of efficiently and uniformly drying the PAS, a revolver-type heating apparatus or a heating apparatus equipped with a stirring blade is preferably used for the drying.

### (6-5) Step 3

Step 3 in the present invention is a step following Step 2. In this step, the PAS is washed with an organic solvent such that the amount of chloroform-extractable components in the PAS becomes not more than 1.7% by weight. In cases where the PAS production is carried out by a preferred method, the amount of chloroform-extractable components in the PAS often becomes 2.0% by weight to 5.0% by weight at the time when Step 2 is completed (although the amount tends to be affected especially by the amount of the organic polar solvent used in the reaction). As described above, the chloroform-extractable components in the PAS have been confirmed to be causative substances of mold deposits during molding of the PAS. Thus, by carrying out Step 3 to reduce the content of the chloroform-extractable components in the PAS, the mold deposits during molding can be reduced.

In Step 3, the amount of chloroform-extractable components in the PAS is preferably reduced to not more than 1.7% by weight by washing the PAS with an organic solvent. In cases where the amount of chloroform-extractable components in the PAS exceeds 1.7% by weight, the mold deposits during molding of the PAS are not clearly improved, so that the effect of the present invention cannot be obtained. Regarding the lower limit of the amount of chloroform-extractable components in the PAS, the smaller the amount of such components, the more preferred from the viewpoint of reducing the mold deposits. Thus, the chloroform-extractable components are most preferably not contained in the PAS at all. In other words, the amount is most preferably 0% by weight. On the other hand, regarding the upper limit, the amount is more preferably not more than 1.2% by weight, still more preferably not more than 0.9% by weight. In cases where the amount of chloroform-extractable components in the PAS is within the preferred range described above, the mold deposits during molding of the PAS tend to be more clearly improved.

The organic solvent used for washing the PAS in Step 3 is not limited as long as the chloroform-extractable components in the PAS are highly soluble, but the PAS is poorly soluble, in the organic solvent, and as long as the organic solvent does not show an action that causes oxidation, degradation, or deterioration of the PAS. Examples of the organic solvent may include amide polar solvents such as N-methyl-2-pyrrolidone, dimethylformamide, dimethylacetamide, and dimethylimidazolidinone; sulfoxide/sulfone solvents such as dimethyl sulfoxide and dimethyl sulfone; ketone solvents such as acetone, methyl ethyl ketone, diethyl ketone, and acetophenone; ether solvents such as dimethyl ether, diethyl ether, dipropyl ether, tetrahydrofuran, and diphenyl ether; ester solvents such as methyl acetate, ethyl acetate, and butyl acetate; nitrile solvents such as acetonitrile; halogen solvents such as chloroform, methylene chloride, trichloroethylene, dichloroethylene, 1,2-dichloroethane, tetrachloroethane, chlorobenzene, and 1-chloronaphthalene; alcohol/phenolic solvents such as methanol, ethanol, propanol, isopropanol, butanol, pentanol, ethylene glycol, propylene glycol, phenol, cresol, and polyethylene glycol; and aliphatic/aromatic hydrocarbon solvents such as *n*-hexane, cyclohexane, benzene, toluene, and *p*-xylene. In particular, *N*-methyl-2-pyrrolidone, dimethylformamide, tetrahydrofuran, chloroform, 1-chloronaphthalene, toluene, or *p-*xylene may be preferably employed since the chloroform-extractable components in the PAS tend to be highly soluble therein. Further, *N*-methyl-2-pyrrolidone, which is often used also as a polymerization solvent for PAS, is especially preferably employed from the viewpoint of ease of obtaining. These organic solvents may be used either individually or as a mixed solvent of two or more thereof.

Here, the amount of chloroform-extractable components in the PAS in the present invention is measured by the following method. First, 10 g of PAS is weighed and then subjected to soxhlet extraction with 100 g of chloroform for 3 hours. The weight after distilling off chloroform from the resulting extract is measured, and its ratio to the weight of the charged polymer is calculated to determine the amount of chloroform-extractable components.

The later-mentioned Step 4 is a process of distilling off the organic solvent used in Step 3, by heating under a flow of an inert gas. In cases where Step 4 is carried out under preferred conditions, the amount of chloroform-extractable components in the PAS hardly changes due to Step 4. Accordingly, the amount of chloroform-extractable components in the PAS after carrying out Step 3 is evaluated based on the amount of chloroform-extractable components in the PAS after carrying out Step 4.

In Step 3, the water content in the PAS before the washing with the organic solvent is preferably not more than 30% by weight. Since water is a poor solvent of the chloroform-extractable components in the PAS, in cases where the water content in the PAS is preliminarily reduced, there is a tendency that the chloroform-extractable components can be more easily reduced by the washing of the PAS with the organic solvent. In cases where the organic solvent used for the washing of the PAS in Step 3 is a water-insoluble organic solvent such as chloroform or toluene, a stable washing effect tends to be obtained irrespective of the water content in the PAS, so that the water content in the PAS does not necessarily need to be not more than 30% by weight. However, taking into account the fact that *N*-methyl-2-pyrrolidone, which is an especially preferred washing solvent from the viewpoint of ease of obtaining, is a water-soluble organic solvent, preliminary reduction of the water content in the PAS can be said to be a more preferred method. Here, regarding the lower limit of the water content in the PAS before the washing with the organic solvent, the lower the water content, the more preferred from the viewpoint of increasing the washing effect. Thus, water is most preferably not contained in the PAS at all. In other words, the water content is most preferably 0% by weight. On the other hand, regarding the upper limit, the water content may be, for example, more preferably not more than 10% by weight, still more preferably not more than 5% by weight, still more preferably not more than 1% by weight. In Step 3, in cases where the water content in the PAS before the washing with the organic solvent is within the preferred range described above, when a water-soluble organic solvent is used for the PAS washing, there is a tendency that the amount of chloroform-extractable components in the PAS can be more easily reduced. Examples of the method of reducing the water content to not more than 30% by weight include a method in which the PAS is dried after the washing with water in Step 2 as described above.

Here, the measurement of the water content in the PAS in the present invention is carried out by the Karl Fischer method according to Japanese Industrial Standards JIS K 7251.

In general, in an operation of washing particles with a solvent, the washing efficiency is known to tend to increase as the specific surface area of the particles increases. There is such a tendency also in the washing in Step 3. More specifically, in Step 3, regarding the lower limit, the specific surface area of the PAS before the washing with the organic solvent may be, for example, preferably not less than 5 m²/g, more preferably not less than 8 m²/g, still more preferably not less than 10 m²/g. On the other hand, regarding the upper limit, the specific surface area may be, for example, preferably not more than 50 m²/g. In Step 3, in cases where the specific surface area of the PAS before the washing with the organic solvent is within the preferred range described above, there is a tendency that the amount of chloroform-extractable components in the PAS can be more easily reduced when the PAS is washed with the organic solvent.

In Step 3, the specific surface area of the PAS before the washing with the organic solvent can be adjusted as described above by, for example, adjusting the temperature at which the organic polar solvent is distilled off from the reaction mixture in Step 1, or, in cases where the PAS is dried after the washing with water in Step 2, adjusting the drying temperature. The temperature at which the organic polar solvent is distilled off from the reaction mixture in Step 1 may be, for example, preferably not less than 200°C, more preferably not less than 220°C regarding the lower limit of the temperature. On the other hand, regarding the upper limit, the temperature may be, for example, preferably not more than 250°C, more preferably not more than 240°C. In cases where the temperature at which the organic polar solvent is distilled off from the reaction mixture in Step 1 is within the preferred range described above, there is a tendency that fusion of the PAS particles to each other can be prevented, and therefore that the specific surface area of the PAS before the washing with the organic solvent in Step 3 can be adjusted to within the preferred range described above. Further, as described in Step 2, the drying temperature for the drying of the PAS after the washing with water is preferably 70°C to 170°C. In cases where the PAS is dried after the washing with water in Step 2, and the drying temperature is within the preferred range described above, there is a tendency that fusion of the PAS particles to each other can be prevented, and therefore that the specific surface area of the PAS before the washing with the organic solvent in Step 3 can be easily adjusted to within the preferred range described above.

Here, in the method of measuring the specific surface area of the PAS, 0.2 g of PAS is weighed and taken into a glass cell, and decompression degassing is carried out at room temperature for 5 hours, followed by performing measurement by the krypton gas adsorption method, and then performing analysis by the multipoint BET theories.

The method of removing the chloroform-extractable components in the PAS by washing the PAS with the organic solvent is not limited. Examples of the method may include a method in which the organic solvent is added to the PAS, and the resulting mixture is slurried, followed by carrying out solid-liquid separation by an operation such as filtration or centrifugation, and then separating and recovering the PAS as a solid content, to remove the chloroform-extractable components in the PAS into the filtrate side, and a method in which the PAS is spread on a filter medium and then washed in the shower of the organic solvent. In the above-described slurrying operation, stirring is preferably carried out from the viewpoint of efficiently removing the chloroform-extractable components in the PAS.

During the removal of the chloroform-extractable components in the PAS by washing the PAS with the organic solvent, the bath ratio (weight bath ratio) of the amount of the organic solvent to the amount of the PAS is not limited. Regarding the lower limit, the bath ratio to the PAS weight may be, for example, not less than 1, preferably not less than 2, more preferably not less than 3. On the other hand, regarding the upper limit, the bath ratio to the PAS weight may be, for example, not more than 100, preferably not more than 50, more preferably not more than 20. In cases where the bath ratio for the removal of the chloroform-extractable components in the PAS by washing the PAS with the organic solvent is within the preferred range described above, there is a tendency that the chloroform-extractable components in the PAS can be efficiently removed. Further, when the solid-liquid separation is carried out by an operation such as filtration or centrifugation after the slurrying, the length of time required for the process tends to be short.

During the removal of the chloroform-extractable components in the PAS by washing the PAS with the organic solvent, the temperature (slurry temperature) is not limited. Regarding the lower limit, the temperature may be, for example, not less than 0°C, preferably not less than 20°C, more preferably not less than 60°C. On the other hand, regarding the upper limit, the temperature may be, for example, not more than 300°C, preferably not more than 250°C, more preferably not more than 200°C, still more preferably not more than 150°C. In cases where the temperature during the removal of the chloroform-extractable components in the PAS by washing the PAS with the organic solvent is within the preferred range described above, there is a tendency that the pressure does not excessively increase, and that the chloroform-extractable components in the PAS can be efficiently extracted. Further, in the process of the solid-liquid separation by an operation such as filtration or centrifugation after the slurrying of the PAS with the organic solvent, the solid-liquid separation speed tends to increase, resulting in higher efficiency of the process. The method of increasing the temperature to not less than the boiling point of the organic solvent is not limited. Examples of the method may include a method in which the PAS and the organic solvent are placed in a pressure resistant container, and the resulting mixture is slurried, followed by sealing the container and heating the mixture.

The stirring time for the removal of the chloroform-extractable components in the PAS by washing the PAS with the organic solvent is not limited. Regarding the lower limit, the stirring time may be, for example, not less than 0.1 minutes, preferably not less than 1 minute, more preferably not less than 5 minutes. Regarding the upper limit, the stirring time may be, for example, not more than 3 hours, preferably not more than 1 hour, more preferably not more than 30 minutes. In cases where the stirring time for the removal of the chloroform-extractable components in the PAS by washing the PAS with the organic solvent is within the preferred range described above, there is a tendency that the chloroform-extractable components can be efficiently extracted.

Further, in the process of the solid-liquid separation by an operation such as filtration or centrifugation after the slurrying of the PAS with the organic solvent, the temperature in the solid-liquid separation apparatus is also not limited. Regarding the lower limit, the temperature may be, for example, not less than 0°C, preferably not less than 20°C, more preferably not less than 60°C. On the other hand, regarding the upper limit, the temperature may be, for example, not more than 300°C, preferably not more than 250°C, more preferably not more than 200°C, still more preferably not more than 150°C. In cases where the temperature in the solid-liquid separation apparatus is within the preferred range described above, the solid-liquid separation operation can be carried out using a simple apparatus rather than using an expensive pressure-resistant equipment. Further, the solid-liquid separation speed tends to increase, resulting in higher efficiency of the process.

Here, specific examples of the solid-liquid separation operation include operations such as filtration and centrifugation. For reducing the amount of the mother liquid contained in the solid content obtained after the solid-liquid separation, a method in which the solid content is subjected to pressurized pressing after the solid-liquid separation is also preferably employed. There is a tendency that, by carrying out such an additional operation, the amount of the mother liquid contained in the solid content can be reduced, and therefore that the amount of chloroform-extractable components contained in the PAS can be more easily reduced.

The number of times of the operation of removing the chloroform-extractable components in the PAS by washing the PAS with the organic solvent is also not limited. In cases where the operation is carried out only once, the chloroform-extractable components in the PAS, derived from the mother liquid in the solid content obtained after the separation, tend to remain, so that the washing operation is preferably carried out two or more times. By carrying out the washing operation a plurality of times, further removal of the chloroform-extractable components is possible.

Regarding the atmosphere during the removal of the chloroform-extractable components in the PAS by washing the PAS with the organic solvent, the removal may be carried out in the air without any problem. From the viewpoint of preventing degradation or oxidation of end groups, this operation is preferably carried out in a non-oxidizing atmosphere. In this case, the atmosphere is preferably an atmosphere of an inert gas such as nitrogen, helium, or argon. From the viewpoint of economical efficiency and ease of handling, the operation is more preferably carried out under nitrogen atmosphere.

### (6-6) Step 4

Step 4 in the present invention is a step following Step 3. In this step, the PAS is heated under a flow of an inert gas at a flow rate of not less than 0.2 L/minute per 1 kg of the PAS, to distill off the organic solvent used in Step 3. By carrying out Step 4, a PAS that generates less mold deposits during molding, having excellent melt fluidity, and having high reactivity with a coupling agent can be obtained.

In Step 4, in cases where the organic solvent used in Step 3 is distilled off by heating the PAS under conditions where the flow rate of the inert gas is less than 0.2 L/minute per 1 kg of the PAS, the PAS tends to undergo heat denaturation, leading to decreased reactivity of the PAS with the coupling agent. In this case, a compound obtained by melt kneading with another resin or inorganic filler tends not to have high moist heat resistance. Here, regarding the lower limit, the flow rate of the inert gas for the distilling off of the organic solvent in Step 4 may be, for example, preferably not less than 0.4 L/minute, more preferably not less than 0.8 L/minute. Regarding the upper limit, the flow rate may be, for example, preferably not more than 50 L/minute, more preferably not more than 25 L/minute. In cases where the flow rate of the inert gas for the distilling off of the organic solvent in Step 4 is within the preferred range described above, there is a tendency that heat denaturation of the PAS can be more suppressed, leading to increased moist heat resistance of the compound obtained by melt kneading with another resin or inorganic filler.

Here, the inert gas means a stable gas that does not cause chemical reaction, and nitrogen, helium, or argon may be preferably used. In particular, from the viewpoint of economical efficiency and ease of handling, nitrogen is more preferably used. The oxygen concentration in the apparatus for the distilling off of the organic solvent in Step 4 inevitably tends to be low due to the flow of the inert gas. Regarding the lower limit of the oxygen concentration in the apparatus, the lower the oxygen concentration, the more preferred from the viewpoint of preventing oxidation of the PAS. Thus, oxygen is most preferably not contained in the apparatus at all. In other words, the oxygen concentration is most preferably 0% by volume. On the other hand, regarding the upper limit, the oxygen concentration may be, for example, preferably not more than 1% by volume, more preferably not more than 0.1% by volume, still more preferably not more than 0.01% by volume. In cases where the oxygen concentration in the apparatus for distilling off the organic solvent in Step 4 is within the preferred range described above, there is a tendency that degeneration of PAS due to oxidation can be prevented.

In Step 4, the pressure in the apparatus for the distilling off of the organic solvent is not limited, and any of a normal pressure condition, a decompression pressure condition, and a pressurized pressure condition may be employed. Since the employment of a decompression pressure condition or a pressurized pressure condition requires introduction of an expensive equipment that is resistant to the pressure environment, a normal pressure condition is preferred from the viewpoint of producing the PAS at lower cost. The normal pressure herein means a pressure close to the pressure in the standard state of the atmosphere, that is, an atmospheric pressure condition at a temperature of about 25°C at an absolute pressure of about 101 kPa.

In Step 4, the temperature at which the organic solvent is distilled off is not limited. Regarding the lower limit, the temperature may be, for example, not less than 70°C, preferably not less than 100°C, more preferably not less than 120°C. Regarding the upper limit, the temperature may be, for example, preferably not more than 250°C, more preferably not more than 230°C. In cases where the drying temperature for the PAS is within the preferred range described above, there is a tendency that the PAS can be efficiently dried in a short time without allowing fusion of the PAS.

The length of time of the distilling off of the organic solvent in Step 4 is not limited. Regarding the lower limit, the length of time may be, for example, not less than 0.1 hours, preferably not less than 1 hour. Regarding the upper limit, the length of time may be, for example, not more than 50 hours, preferably not more than 20 hours, more preferably not more than 10 hours. In cases where the drying time for the PAS is within the preferred range described above, the PAS can be efficiently industrially produced while suppressing heat denaturation of the PAS.

Here, the dryer used for the distilling off of the organic solvent in Step 4 is not limited. A common vacuum dryer or hot air dryer may be used. A revolver-type heating apparatus or a heating apparatus equipped with a stirring blade, a fluidized bed dryer, or the like may also be used. From the viewpoint of efficiently and uniformly drying the PAS, a revolver-type heating apparatus or a heating apparatus equipped with a stirring blade is preferably used for the drying.

In cases where the boiling point of the organic solvent used for the washing in Step 3 is high, the process of distilling off of the organic solvent in Step 4 tends to require a high temperature and a long time. For the purpose of reducing such a tendency, a method in which the organic solvent contained in the PAS is replaced with another solvent having a lower boiling point before carrying out Step 4, followed by drying is also preferably employed. The solvent used for the replacement herein is not limited as long as this solvent is miscible with the solvent used for the washing. Water or acetone is often preferably employed from the viewpoint of the fact that they can be obtained at low cost, and that they have relatively low boiling points. Examples of the method of replacing the organic solvent contained in the PAS with another solvent having a lower boiling point may include a method in which the solvent for the replacement is added to the PAS, and the resulting mixture is slurried, followed by carrying out solid-liquid separation by an operation such as filtration or centrifugation, and a method in which the PAS is spread on a filter medium and then washed in the shower of the solvent for the replacement. This operation is effective even in cases where it is carried out only once. However, there is a tendency that, in cases where the operation is carried out two or more times to allow the solvent replacement to further proceed, the drying treatment can be carried out at lower temperature in a shorter time.

Step 4 in the present invention is a process of distilling off the organic solvent used in Step 3, by heating under a flow of an inert gas. In cases where Step 4 is carried out under preferred conditions, the amount of chloroform-extractable components in the PAS hardly changes due to Step 4. Therefore, the amount of chloroform-extractable components in the PAS after carrying out Step 3 can be evaluated based on the amount of chloroform-extractable components in the PAS after carrying out Step 4.

### (7) Additional Post-Processing

Although the thus obtained PAS can achieve sufficient reduction of mold deposits during molding, a method in which the PAS obtained after carrying out Step 4 is additionally subjected to heat treatment (curing) to form (A) a polyarylene sulfide having a crosslinked structure may also be preferably employed for the purpose of further reduction of the mold deposits.

The temperature for the additional heat treatment of the PAS obtained after carrying out Step 4 is not limited. Regarding the lower limit, the temperature may be, for example, not less than 150°C, preferably not less than 160°C. Regarding the upper limit, the temperature may be, for example, not more than 270°C, preferably not more than 260°C. In cases where the temperature for carrying out the heat treatment of the PAS is within the preferred range described above, it is more likely that the PAS is not excessively heat-denatured, that the mold deposits generated during molding of the PAS can be further reduced, and that the mechanical strength is improved. Further, there is a tendency that the heat treatment can be uniformly carried out without allowing fusion of the PAS.

The length of time of the additional heat treatment of the PAS obtained after carrying out Step 4 is not limited. Regarding the lower limit, the length of time may be, for example, not less than 0.2 hours, preferably not less than 0.3 hours. Regarding the upper limit, the drying time may be, for example, not more than 50 hours, preferably not more than 20 hours, more preferably not more than 10 hours, still more preferably not more than 6 hours. In cases where the length of time of the heat treatment of the PAS is within the preferred range described above, it is more likely that the PAS is not excessively heat-denatured, that the mold deposits generated during molding of the PAS can be further reduced, and that the mechanical strength is improved.

Here, in cases where the PAS obtained after carrying out Step 4 is subjected to the additional heat treatment, the apparatus used therefor is not limited. A common vacuum dryer or hot air dryer may be used. A revolver-type heating apparatus or a heating apparatus equipped with a stirring blade, a fluidized bed dryer, or the like may also be used. From the viewpoint of efficiently and uniformly carrying out the heat treatment of the PAS, a revolver-type heating apparatus or a heating apparatus equipped with a stirring blade is preferably used for the heat treatment. Regarding the atmosphere during the additional heat treatment of the PAS obtained after carrying out Step 4, the heat treatment is preferably carried out in a non-oxidizing atmosphere from the viewpoint of preventing degradation or oxidation of end groups. In some cases, this heat treatment is carried out for increasing the melt viscosity of the PAS. In such cases, the heat treatment may be carried out in an atmosphere containing a certain amount of oxygen. Regarding the lower limit, the oxygen concentration in such cases may be, for example, not less than 0.5% by volume, preferably not less than 1% by volume. On the other hand, regarding the upper limit, the oxygen concentration may be, for example, not more than 50% by volume, preferably not more than 25% by volume, more preferably not more than 15% by volume. In cases where the oxygen concentration in the atmosphere during the heat treatment of the PAS is within the preferred range described above, there is a tendency that the PAS is not excessively heat-denatured, and that the melt viscosity of the PAS can be easily controlled to a desired viscosity. For the gas flow during the additional heat treatment of the PAS obtained after carrying out Step 4, a certain level of flow rate is preferably employed from the viewpoint of efficiently allowing the heat treatment to proceed. Regarding the lower limit, the flow rate may be, for example, not less than 0.1 L/minute per 1 kg of the resin. On the other hand, regarding the upper limit, the flow rate per 1 kg of the resin may be, for example, not more than 50 L/minute, preferably not more than 30 L/minute, more preferably not more than 15 L/minute. In cases where the flow rate of the gas flow during the heat treatment of the PAS is within the preferred range described above, there is a tendency that the PAS can be efficiently heat-treated.

Examples of an index of the PAS having a preferable crosslinked structure include a PAS such that, when the PAS is dissolved in a 20-fold weight of 1-chloronaphthalene at 250°C over a period of 5 minutes, and subjected to heat pressure filtration through a PTFE membrane filter having a pore size of 1 µm, the amount of the resulting residue is not more than 4.0% by weight. For (A) the PAS to be used in the present invention, it is preferable that the amount of the residue is not more than 4.0% by weight. Bringing the amount of the residue to not more than 4.0% by weight allows the thermal oxidation crosslinking of the PAS to progress suitably, and can prevent gelled matter in the resin from increasing. Allowing the thermal oxidation crosslinking of the PAS to progress suitably makes it possible to prevent the tensile elongation and impact strength of the PAS from decreasing, and besides, suppress a rise in the melt viscosity to maintain the melt moldability at an excellent level. The upper limit of the amount of the residue is, for example, more preferably not more than 3.0% by weight, still more preferably not more than 2.0% by weight. The lower limit of the amount of the residue is not particularly limited, and is, for example, preferably not less than 0.5% by weight.

In this regard, the above-described amount of the residue is measured using a sample obtained by forming a PAS into a pressed film having a thickness of approximately 80 µm, and using a high-temperature filtering device and a stainless steel test tube including a pneumatic cap and a collection funnel. Specifically, a membrane filter having a pore size of 1 µm is first set on a stainless steel test tube. Then, a PAS formed into a pressed film having a thickness of approximately 80 µm and a 20-fold weight of 1-chloronaphthalene are weighed out, and hermetically contained in the test tube. The resulting object is set in a high-temperature filtering device at 250°C, and heated with shaking for 5 minutes. Then, a syringe containing air is connected to the pneumatic cap, the piston of the syringe is pushed, and the sample in a hot state is pneumatically filtrated. A specific method of quantitating the amount of the residue is such that a difference in weight between the membrane filter before filtration and the membrane filter dried in vacuo at 150°C for 1 hour after filtration is determined. Preferable examples of a method of controlling the amount of the residue of a PAS to be used in the present invention at not more than 4.0% by weight include a method in which the treatment temperature is set at 160 to 220°C, the oxygen concentration by volume is set at 2% by volume to 25% by volume, the treatment time is set at 0.2 to 20 hours, and the PAS is suitably oxidated under heat treatment. Under these oxidation conditions, suitable oxidation crosslinking progresses, thus enabling the amount of the residue of the PAS to be not more than 4.0% by weight.

### (8) Characteristics of PAS to Be Used in Present Invention

It has been found that, when the PAS to be used in the present invention is subjected to measurement of the molecular weight by gel permeation chromatography (GPC), which is a type of size exclusion chromatography (SEC), the molecular weight distribution shows a characteristic shape which is not found in conventional PAS's. More specifically, the PAS shows a molecular weight distribution having a shape in which, when the cumulative integral value from the molecular weight of 100 to the molecular weight of 10,000 in the molecular weight distribution curve is taken as 100, the cumulative integrated value at the molecular weight of 4,000 is 48 to 53. For example, in a production method for a PAS by what is called the quench method, after the PAS is polymerized, an operation of adding water into the system is carried out before the precipitation of PAS particles, followed by slowly cooling the system to allow the PAS particles to grow to have a large particle diameter. In cases where such a treatment is carried out, porous PAS particles tend to be formed, so that oligomer components not corresponding to the causative substances of the mold deposits tend to be excessively removed by washing with an organic solvent. A PAS obtained by this quench method shows a molecular weight distribution having a shape in which, when the cumulative integral value from the molecular weight of 100 to the molecular weight of 10,000 in the molecular weight distribution curve is taken as 100, the cumulative integrated value at the molecular weight of 4,000 is less than 48. Thus, the PAS tends to become a material which shows less mold deposits during molding, but which has low melt fluidity and poor moldability. On the other hand, in a production method for a PAS by what is called the flash method, the reaction system under high temperature conditions after polymerization of the PAS is flashed into a container at normal pressure or decompression pressure to distill off the polymerization solvent. Since the greatest advantage of this method has been widely recognized as inexpensive production of a PAS, the method does not lead to the idea of performing the washing operation using an organic solvent at an additional cost. The PAS obtained by this flash method shows a molecular weight distribution having a shape in which, when the cumulative integral value from the molecular weight of 100 to the molecular weight of 10,000 in the molecular weight distribution curve is taken as 100, the cumulative integrated value at the molecular weight of 4,000 is more than 53. Thus, the PAS tends to become a material which has high melt fluidity, but which shows more mold deposits during molding. Compared to the conventional PAS's described above, the PAS to be used in the present invention can be said to be a material which achieves both reduction of mold deposits during molding and high melt fluidity, and therefore to be a material having better moldability. Here, the evaluation of the melt fluidity of the PAS in the present invention is carried out by measuring the melt flow rate (the resin discharge amount per 10 minutes) according to ASTM-D1238-70, and comparing the value.

In the PAS to be used in the present invention, when the melt flow rate of the PAS is defined as MFR1, and when the melt flow rate obtained after mixing the PAS with an epoxy silane coupling agent at a weight ratio of 100:1 and heating the resulting mixture at 315.5°C for 5 minutes is defined as MFR2, the rate of change represented by MFR2/MFR1 needs to be not more than 0.085. This means that reaction of the PAS with the epoxy silane coupling agent causes an increase in the melt viscosity, and that the melt viscosity increases as the rate of change decreases. In cases where the rate of change represented by MFR2/MFR1 exceeds 0.085, there is a problem that a compound prepared by melt kneading with another resin or inorganic filler has poor mechanical strength and hydrolysis resistance. For obtaining such a PAS, in Step 4 of the present invention, the PAS can be heated under a flow of an inert gas at a flow rate of not less than 0.2 L/minute per 1 kg of the PAS, to distill off the organic solvent used in Step 3. Thus, a PAS whose melt viscosity largely increases due to reaction with an epoxy silane coupling agent tends to have improved mechanical strength and moist heat resistance when it is prepared as a compound by melt kneading with another resin or inorganic filler, and such a PAS can therefore be preferably used in uses requiring moist heat resistance. Here, the lower limit of the rate of change represented by MFR2/MFR1 is not limited. The rate of change may be, for example, not less than 0.0001, preferably not less than 0.001, more preferably not less than 0.002. Regarding the upper limit, the rate of change is not more than 0.085 as described above, and may be, for example, preferably not more than 0.080, more preferably not more than 0.070, still more preferably not more than 0.060. In cases where the rate of change represented by MFR2/MFR1 is within the preferred range described above, the PAS tends to have improved mechanical strength and moist heat resistance when it is prepared as a compound by melt kneading with another resin or inorganic filler, and such a PAS can therefore be especially preferably used in uses requiring moist heat resistance. Here, the rate of change represented by MFR2/MFR1 in the present invention is calculated as follows. First, the melt flow rate of the PAS is measured according to ASTM-D1238-70 to determine MFR1, and then a mixture prepared by mixing 1 g of the PAS with 0.01 g of 2-(3,4-epoxycyclohexyl)ethyltrimethoxysilane (KBM-303, manufactured by Shin-Etsu Chemical Co., Ltd.) using a mortar and a pestle is subjected to measurement of the melt flow rate to determine MFR2, followed by calculation of MFR2/MFR1 .

The PAS to be used in the present invention tends to have a cooling crystallization temperature of 210°C to 250°C. Compared to common PAS's, the PAS to be used in the present invention tends to have higher crystallinity. The PAS can therefore be especially preferably used for injection molding of resins. It is known that, in injection molding, crystallization is generally more promoted as the cooling speed decreases in the cooling crystallization temperature range during the process from the molten state to the cooled and solidified state. Therefore, for resins having low crystallinity, the mold temperature is often set to a relatively high temperature in order to suppress the cooling speed. However, since the PAS obtained by the method of the present invention tends to have high crystallinity, crystallization sufficiently proceeds even at a relatively low mold temperature, to enable efficient molding of the PAS. The cooling crystallization temperature of the PAS obtained by the preferred method of the present invention varies depending on the polymerization conditions and the washing conditions. Regarding the lower limit, the cooling crystallization temperature is likely to be not less than 210°C, more likely to be not less than 215°C. Regarding the upper limit, the cooling crystallization temperature is likely to be not more than 250°C, more likely to be not more than 240°C.

### (B) Glass Fiber

A polyarylene sulfide resin composition according to the present invention contains 100 parts by weight of (A) the polyarylene sulfide and at least 10 to 200 parts by weight of (B) a glass fiber. The lower limit of the more preferable blending amount of (B) the glass fiber is preferably not less than 30 parts by weight, and is preferably not less than 50 parts by weight from the viewpoint of obtaining a higher strength. The upper limit of the blending amount of (B) the glass fiber is preferably not more than 150 parts by weight, and is preferably not more than 130 parts by weight from the viewpoint of suppressing the brittling.

(B) the glass fiber to be used in the present invention is preferably treated with a convergence agent or a surface treating agent. Examples of the convergence agent or the surface treating agent include a functional compound such as an epoxy-based compound, an isocyanate-based compound, a silane-based compound, and a titanate-based compound. An epoxy-based compound containing a large amount of epoxy is particularly preferable from the viewpoint of improving the moist heat resistance of a reinforced fiber.

The cross-sectional shape of (B) the glass fiber to be used in the present invention is not particularly limited. Preferable examples include a cross-sectional shape such as a common round shape, and in addition, an oblate shape, a cocoon shape, an elliptic shape, an oval shape, a semicircular or circular arc shape, a rectangular shape, or a shape similar thereto from the viewpoint of improving the warpage of the molded article. The cross-sectional shape is more preferably oblate, in particular.

In cases where (B) the glass fiber to be used in the present invention has a round cross-sectional shape (hereinafter referred to as a round-shaped glass fiber for short in some cases), the fiber diameter of the glass fiber is preferably not less than 4 µm in diameter, more preferably not less than 7 µm, still more preferably not less than 10 µm. In cases where the fiber diameter is within the preferred range described above, the glass fiber does not become easily breakable during melt kneading. The upper limit of the fiber diameter is preferably not more than 25 µm, more preferably not more than 20 µm, still more preferably not more than 15 µm. A smaller diameter as this fiber diameter leads to increasing the number of glass fibers per unit weight, and increasing the reinforcing effect, and thus, is preferable.

Additionally, in the present invention, (B) the glass fiber is preferably opened in the polyarylene sulfide resin composition. Here, the opened state refers to the state where (B) the glass fiber in the polyarylene sulfide resin composition is opened to be brought to single fibers, and specifically means that, among the reinforced fibers observed, the number of reinforced fibers in the bundles each consisting of not less than 10 fibers is not more than 40% of the total number of the reinforced fibers.

In the present invention, the glass fiber having a round cross-sectional shape, as (B) the glass fiber, is, for example, tradename T-760H available from by Nippon Electric Glass Co., Ltd.

(B) the glass fiber according to the present invention may be a glass fiber having an oblate cross-sectional shape (hereinafter referred to as an oblate glass fiber for short in some cases). The oblate glass fiber is such that, in the cross section of the glass fiber in the direction perpendicular to the longitudinal direction, the ratio (hereinafter referred to as an oblateness ratio in some cases) of the major axis (the longest direct distance in the cross section) to the minor axis (the longest direct distance perpendicular to the major axis) is preferably 1.3 to 10, more preferably 1.5 to 5, still more preferably 1.5 to 4.

Having the above-described ratio of the major axis to the minor axis at not less than 1.3 affords an effect to deformation. In addition, the ratio is preferably not more than 10 from the viewpoint of the production of a product. In addition, a hollow fiber can be used as the glass fiber, for example, for the purpose of decreasing the specific gravity.

The cross-sectional area of an oblate glass fiber to be used in the present invention is preferably 2 × 10⁻⁵ to 8 × 10⁻³ mm². The cross-sectional area is more preferably 8 × 10⁻⁵ to 8 × 10⁻³ mm², still more preferably 8 × 10⁻⁵ to 8 × 10⁻⁴ mm². Having the cross-sectional area of the oblate glass fiber within the preferred range described above affords a sufficient reinforcing effect, and on the other hand, provides easy handling.

The length of the oblate glass fiber is arbitrary. Depending on the even balance between the mechanical properties and deformation of the molded article, the length is preferably shorter in order to decrease the amount of deformation of the molded article. From the viewpoint of the mechanical strength, the average fiber length is preferably at least not less than 30 µm, and is suitably selected in accordance with the performance required. Usually, the length is preferably 50 to 1,000 µm.

A commercially available product of (B) the glass fiber having an oblate cross section is, for example, CSG3PA-830 available from Nitto Boseki Co., Ltd. In addition, a product under the tradename T-760FGF is available from Nippon Electric Glass Co., Ltd.

### (C) Non-fibrous Inorganic Filler

In another preferable aspect, a polyarylene sulfide resin composition according to the present invention also contains 10 to 250 parts by weight of (C) a non-fibrous inorganic filler with respect to 100 parts by weight of (A) the polyarylene sulfide. The lower limit of the blending amount of (C) the non-fibrous inorganic filler is, for example, more preferably not less than 30 parts by weight, and is preferably not less than 50 parts by weight from the viewpoint of improving the dimensional stability. The upper limit of the blending amount of (C) the non-fibrous inorganic filler is preferably not more than 200 parts by weight, and is, for example, preferably not more than 150 parts by weight from the viewpoint of suppressing brittling.

Examples of (C) the non-fibrous inorganic filler to be used include: fullerene; silicates such as talc, wollastonite, zeolite, sericite, mica, kaolin, clay, pyrophyllite, bentonite, asbestos, and alumina silicate; metal compounds such as silicon oxide, magnesium oxide, alumina, zirconium oxide, titanium oxide, and iron oxide; carbonates such as calcium carbonate, magnesium carbonate, and dolomite; sulphates such as calcium sulfate and barium sulfate; glass beads; glass flakes; glass powder; ceramic beads; boron nitride; silicon carbide; carbon black; silica; graphite; and the like. These may be hollow. Furthermore, these inorganic fillers can be used in combination of two or more kinds thereof. In addition, these inorganic fillers may be used after pretreatment with a coupling agent such as an isocyanate-based compound, organic silane-based compound, organic titanate-based compound, organic borane-based compound, or epoxy compound. Among these, calcium carbonate, which is relatively more easily dispersed well in a PAS even in accordance with high ratio formulation, is preferably taken as an example.

### (D) Organic Silane Coupling Agent Having Functional Group

In a preferable aspect, a polyarylene sulfide resin composition according to the present invention also contains 0.1 to 10 parts by weight of (D) an organic silane coupling agent having at least one functional group selected from the group consisting of an epoxy group, an amino group, and an isocyanate group (hereinafter referred to as (D) an organic silane coupling agent having a functional group for short in some cases), with respect to 100 parts by weight of (A) the polyarylene sulfide, for the purpose of improving the mechanical strength, toughness, and the like. Adding (D) the organic silane coupling agent having a functional group makes it possible to improve the mechanical strength, toughness, and the like. The lower limit of the blending amount of (D) the organic silane coupling agent having a functional group is, for example, more preferably not less than 0.2 parts by weight, and is, for example, still more preferably not less than 0.4 parts by weight from the viewpoint of obtaining a sufficient effect for improving the mechanical strength. The upper limit of the blending amount of (D) the organic silane coupling agent having a functional group is more preferably not more than 5 parts by weight, and is, for example, still more preferably not more than 2 parts by weight from the viewpoint of suppressing excessive thickening.

Specific examples of (D) the organic silane coupling agent having a functional group include: epoxy group-containing alkoxysilane compounds such as γ-glycidoxypropyltrimethoxysilane, γ-glycidoxypropyltriethoxysilane, and 2-(3,4-epoxycyclohexyl)ethyltrimethoxysilane; isocyanate group-containing alkoxysilane compounds such as γ-isocyanate propyltriethoxysilane, γ-isocyanate propyltrimethoxysilane, γ-isocyanate propylmethyldimethoxysilane, γ-isocyanate propylmethyldiethoxysilane, γ-isocyanate propylethyldimethoxysilane, γ-isocyanate propylethyldiethoxysilane, and γ-isocyanate propyltrichlorosilane; amino group-containing alkoxysilane compounds such as γ-(2-aminoethyl)aminopropylmethyldimethoxysilane, γ-(2-aminoethyl)aminopropyltrimethoxysilane, γ-aminopropyltrimethoxysilane, and γ-aminopropyltriethoxysilane; and the like. Among the organic silane coupling agents having an epoxy group, γ-glycidoxypropyltrimethoxysilane and γ-glycidoxypropyltriethoxysilane are more preferable from the viewpoint of achieving more excellent mechanical strength and moist heat resistance. When (D) organic silane coupling agents having a functional group are compared in terms of the functional group, an organic silane coupling agent having at least any one selected from an amino group and an isocyanate group is taken as a more preferable example than an organic silane coupling agent having an epoxy group, from the viewpoint of achieving better mechanical strength and moist heat resistance. From examples of (D) the organic silane coupling agent having a functional group, 2-(3,4-epoxycyclohexyl)ethyltrimethoxysilane having an epoxy group is preferably excluded.

A method of producing a PAS resin composition according to the present invention is not particularly limited. Representative examples include a method in which raw materials are mixed, supplied into a commonly known melt-mixing machine such as a single screw or twin screw extruder, a bumbary mixer, a kneader, or a mixing roll, and kneaded.

Among these, a suitable method is a method in which melt kneading is performed using a twin screw extruder such that the ratio LID of the screw length L to the screw diameter D is 10 to 100. LID is more suitably 20 to 100, still more suitably 30 to 100.

The PAS resin composition thus obtained is a resin composition that provides improved mechanical strength, generates a smaller amount of gas during melting, and has excellent moldability. Specifically, a preferable weight loss on heating of a PAS resin composition according to the present invention is not more than 0.35% by weight, more preferably not more than 0.30% by weight, still more preferably not more than 0.25% by weight. In this regard, the weight loss on heating is determined as follows: 10 g of pellets of a PAS composition according to the present invention is weighed out into an aluminum cup preliminarily heated at 330°C for 3 hours; the pellets are heated using a hot air dryer at 320°C for 2 hours, then taken out into a desiccator containing a drying agent, and cooled; the weight of the resulting material is weighed; and the weight loss on heating is calculated as a weight percentage of the decrease to the weight before heating.

A PAS resin composition according to the present invention can be used for various kinds of molding such as injection molding, extrusion molding, blow molding, and transfer molding, and is particularly suitable for injection molding applications.

A PAS resin composition according to the present invention has excellent mechanical strength and moist heat resistance, and thus, is used particularly usefully for a fluid piping part through which a fluid containing water as a major component flows. In this regard, a fluid containing water a major component is a liquid containing not less than 30% by weight of water. Examples include: roomtemperature water; hot water heated from room temperature to 100°C; besides, the same cooling water as cooling water for automobiles that is called a long-life coolant, except that the ethylene glycol as a major component is diluted with not less than 30% by weight of water; and the like. More specific examples of the piping part include a joint, valve, servo, sensor, pipe, pump, and the like through which cooling water for automobiles, warm water in a water heater, or the like flows. The liquid that flows through a piping part may be: an alcohol containing water as a major component; a glycol; or an antifreezing liquid containing glycerin or the like. The kind and concentration of the liquid are not particularly limited.

Other examples of applications for which a molded article composed of a PAS resin composition according to the present invention can be used include: electrical and electronic parts typified by sensors, LED lamps, connectors for general use, sockets, resistors, relay cases, switches, coil bobbins, capacitors, variable capacitor cases, oscillators, various terminal boards, transformers, plugs, printed boards, tuners, loudspeakers, microphones, headphones, small motors, magnetic head bases, semiconductors, liquid crystals, FDD carriages, FDD chassis, motor brush holders, parabolic antennas, computer-related parts, and the like; and home and business appliance parts typified by VTR parts, television parts, irons, hair dryers, rice cooker parts, microwave oven parts, audio equipment parts such as audio parts, audio or laser discs (registered trademark) and compact discs, lighting parts, refrigerator parts, airconditioner parts, typewriter parts, word processor parts, and the like. Other examples include various applications: machine-related parts typified by office computer-related parts, telephone-related parts, facsimile-related parts, copier-related parts, jigs for washing, motor parts, lighters, typewriters, and the like; optical equipment-related and precision machine-related parts typified by microscopes, binoculars, cameras, watches, and the like; and automobile-related and vehicle-related parts such as valve alternator terminals, alternator connectors, IC regulators, potentiometer bases for light dimmers, various valves such as exhaust gas valves, various fuel-related, exhaust-system-related, and suction-system-related pipes, air intake nozzle snorkels, intake manifolds, fuel pumps, engine cooling water joints, carburetor main bodies, carburetor spacers, exhaust gas sensors, cooling water sensors, oil temperature sensors, throttle position sensors, crankshaft position sensors, airflow meters, brake pad wear sensors, thermostat bases for airconditioners, hot air flow control valves, brush holders for radiator motors, water pump impellers, turbine vanes, wiper motor-related parts, distributors, starter switches, starter relays, wire harnesses for transmission, window washer nozzles, airconditioner panel switch boards, coils for fuel-related electromagnetic valves, connectors for fuses, horn terminals, electrical and electronic part-insulating plates, step motor rotors, lamp sockets, lamp reflectors, lamp housings, brake pistons, solenoid bobbins, engine oil filters, ignition cases, vehicle speed sensors, cable liners, and the like.

A molded article composed of a resin composition according to the present invention is suitable particularly for water plumbing parts, such as toilet-related parts, water heater-related parts, bath-related parts, pump-related parts, and water meter-related parts. Specific examples include city water faucet valves, mixing faucets, mixing valves, pump parts, pipe joints, joints (elbows, tees, sockets, and the like), water amount control valves, pressure reducing valves, relief valves, electromagnetic valves, three-way valves, thermo valves, hot water temperature sensors, water amount sensors, bathtub adapters, water meter housings, and the like.

### EXAMPLES

The present invention is below described more specifically with reference to Examples, but the present invention is not limited to the description of these Examples.

### [Evaluation Methods for PAS Produced in Reference Example]

### (1) Measurement of Molecular Weight, and Evaluation Method for Molecular Weight Distribution Shape

Measurement of the molecular weight of the PAS was carried out by gel permeation chromatography (GPC), which is a type of size exclusion chromatography (SEC). A measurement sample was prepared as follows. To 5 mg of PAS, 5 g of 1-chloronaphthalene was added. After dissolving the PAS by heating at 250°C, the resulting solution was cooled to room temperature to form a slurry, followed by filtering the slurry through a membrane filter (hole diameter, 0.1 µm). The prepared sample was subjected to GPC measurement under the following conditions, and the number average molecular weight (Mn) and the weight average molecular weight (Mw) were calculated in terms of polystyrene.
Apparatus: SSC-7110, manufactured by Senshu Scientific Co., Ltd.
Column: Shodex UT806M × 2
Eluent: 1-Chloronaphthalene
Detector: Differential Refractometer
Column temperature: 210°C
Pre-constant bath temperature: 250°C
Pump constant bath temperature: 50°C
Detector temperature: 210°C
Flow rate: 1.0 mL/minute
Sample injection amount: 300 µL

The molecular weight distribution shape of the PAS was evaluated as follows. First, the concentration fractions of the chromatogram obtained by the above GPC measurement were sequentially accumulated, and an integral molecular weight distribution curve was prepared by plotting the molecular weight (log) on the horizontal axis and plotting the integrated value of the concentration fraction on the vertical axis. The range corresponding to the molecular weight values from 100 to 10,000 on the horizontal axis of the integral molecular weight distribution curve was extracted, and the cumulative integral value of the molecular weights from 100 to 4,000 was calculated taking the cumulative integral value of the molecular weights from 100 to 10,000 as 100. The resulting value was regarded as the molecular weight distribution shape.

### (2) Melt Flow Rate (MFR)

Evaluation of the melt fluidity of the PAS was carried out by measuring the melt flow rate (the resin discharge amount per 10 minutes: g/10 min) according to ASTM-D1238-70, and comparing the value.
Apparatus: Melt Indexer, manufactured by Toyo Seiki Seisaku-sho, Ltd. (using an orifice having a length of 8.0 mm and a hole diameter of 2.095 mm)
Load: 5,000 g
Sample amount: 7 g
Temperature: 315.5°C (melting time, 5 minutes)

### (3) Rate of Change Represented by MFR2/MFR1

The rate of change represented by MFR2/MFR1, wherein the melt flow rate of the PAS is represented as MFR1, and wherein the melt flow rate obtained after mixing the PAS with an epoxy silane coupling agent at a weight ratio of 100:1 and heating the resulting mixture at 315.5°C for 5 minutes is represented as MFR2, was determined as follows. First, the melt flow rate of the PAS was measured according to ASTM-D1238-70 to determine MFR1, and then a mixture prepared by mixing 1 g of the PAS with 0.01 g of 2-(3,4-epoxycyclohexyl)ethyltrimethoxysilane (KBM-303, manufactured by Shin-Etsu Chemical Co., Ltd.) using a mortar and a pestle was subjected to measurement of the melt flow rate by heating at 315.5°C for 5 minutes to determine MFR2, followed by calculation of MFR2/MFR1 .

### (4) Amount of Residue

A PTFE membrane filter having a pore size of 1 µm was preliminarily weighed, and set on a stainless steel test tube including a pneumatic cap and a collection funnel, the test tube manufactured by Senshu Scientific Co., Ltd. Then, 100 mg of the PAS formed into a pressed film having a thickness of approximately 80 µm and 2 g of 1-chloronaphthalene were weighed out, and hermetically contained in the test tube. This resulting object was inserted into a high-temperature filtering device SSC-9300 manufactured by Senshu Scientific Co., Ltd., and heated with shaking at 250°C for 5 minutes to dissolve the PAS in 1-chloronaphthalene. A 20 mL syringe containing air was connected to the pneumatic cap, and then, the piston was pushed to filtrate the solution through a membrane filter. The membrane filter was taken out, dried in vacuo 150°C for 1 hour, and weighed. A difference in the weight of the membrane filter between before and after the filtration was regarded as the amount of the residue (% by weight).

### (A) PAS

### [Reference Example 1] Preparation of PAS:A1

To an autoclave equipped with a mixer and with an extraction valve at the bottom, a distillation equipment and an alkaline trap were connected, and 11.6 kg (100 moles) of 48.3% aqueous sodium hydrosulfide solution, 8.25 kg (101 moles) of 48.9% aqueous sodium hydroxide solution, 16.4 kg (165 moles) of N-methyl-2-pyrrolidone, and 1.56 kg (19.0 moles) of sodium acetate were charged therein, followed by sufficient nitrogen substitution of the inside of the reaction container.

While nitrogen was allowed to flow into the autoclave, the mixture was slowly heated to 237°C for 3 hours with stirring at 60 rpm. As a result of deliquefaction, 12 kg of a distillate was obtained. As a result of analysis of the distillate by gas chromatography, the composition of the distillate was found to be 10.2 kg of water and 1.8 kg of *N*-methyl-2-pyrrolidone. It was thus found that, at this stage, 20 g (1 mole) of water was remaining, and 14.6 kg of *N*-methyl-2-pyrrolidone was remaining, in the reaction system. The amount of hydrogen sulfide that has flown away from the reaction system through the dehydration operation was 0.675 moles.

Subsequently, the autoclave was cooled to not more than 170°C, and 15 kg (101.8 moles) of *p*-dichlorobenzene and 14.6 kg (147 moles) of *N*-methyl-2-pyrrolidone were charged therein, followed by performing sufficient nitrogen substitution of the inside of the reaction container again, and then sealing the container. By this, the amount of the dihalogenated aromatic compound used in the mixture became 102.5 moles per 1 mole of sulfur in the sulfidating agent. As a result of the charging operation, the internal temperature decreased to 130°C.

Subsequently, the temperature in the reaction container was raised from 130°C to 275°C with stirring at 250 rpm for about 2 hours, and then kept at 275°C for 70 minutes to allow the reaction to proceed. The pressure in the system was 1.10 MPa.

### (Step 1)

After the end of the reaction, the extraction valve at the bottom of the autoclave was opened up, and the reaction solution at 1.10 MPa at 275°C was flashed for 15 minutes into a container equipped with a mixer (having a distillation equipment) heated to 220°C at normal pressure. Thereafter, the container was kept at 240°C with stirring to distill off *N*-methyl-2-pyrrolidone, and then the heating was stopped to cool the container. The solid content in the container was then recovered.

### (Step 2)

The solid content obtained in Step 1 was charged into another container equipped with a mixer, and 108 kg of ion-exchanged water was added thereto, followed by stirring the mixture at 70°C for 30 minutes and then filtering the mixture through a pressurized filter to obtain a cake.

The cake obtained as described above was charged into a pressure resistant container equipped with a mixer, and 128 kg of ion-exchanged water was added thereto, followed by performing nitrogen substitution, raising the temperature to 192°C, and then stirring the mixture for 30 minutes. Subsequently, the container was cooled, and then a slurry was removed therefrom and subjected to filtration through a pressurized filter to obtain a cake.

The cake obtained as described above was charged again into a container equipped with a mixer, and 108 kg of ion-exchanged water was added thereto, followed by stirring the mixture at 70°C for 30 minutes and then filtering the mixture through a pressurized filter to obtain a cake. This process was repeated three times.

The cake under the wet condition obtained was dried at 120°C for 3 hours under a nitrogen gas flow to obtain a dry polyarylene sulfide (PAS). The water content of the dry PAS obtained was measured by the Karl Fischer method according to the method described in JIS K 7251. As a result, the water content was found to be 0.1% by weight.

### (Step 3)

The dry PAS obtained in Step 2 was charged into a container equipped with a mixer, and 54 kg of *N*-methyl-2-pyrrolidone (weight bath ratio to PAS, 5) was added thereto, followed by stirring the mixture at 30°C for 20 minutes and then filtering the mixture through a pressurized filter to obtain a cake.

### (Step 4)

The cake under the wet condition obtained in Step 3 (containing 10.8 kg of PAS) was heated at 200°C for 20 hours under a nitrogen flow at a flow rate of 4 L/minute (0.4 L/minute per 1 kg of polyarylene sulfide) to distill off NMP, to thereby obtain a dry PAS.

As a result of analysis of the PAS:A1 obtained, the weight average molecular weight Mw was found to be 40,000. When the cumulative integral value from the molecular weight of 100 to the molecular weight of 10,000 was taken as 100, the cumulative integrated value from the molecular weight of 100 to the molecular weight of 4,000 was calculated to be 52. In addition, MFR1 was 637 g/10 minutes, MFR2 was 32 g/10 minutes, and the rate of change represented by MFR2/MFR1 was 0.050. The amount of the residue obtained after the dissolution in the 1-chloronaphthalene solvent was 0.6% by weight.

### [Reference Example 2] Preparation of PAS:A2

The PAS:A1 obtained in Reference Example 1 was oxidated under heat treatment under conditions of an oxygen concentration of 2% at 220°C for 12 hours. As a result of analysis of the PAS:A2 obtained, the weight average molecular weight Mw was found to be 45,000. When the cumulative integral value from the molecular weight of 100 to the molecular weight of 10,000 was taken as 100, the cumulative integrated value from the molecular weight of 100 to the molecular weight of 4,000 was calculated to be 51. In addition, MFR1 was 450 g/10 minutes, MFR2 was 25 g/10 minutes, and the rate of change represented by MFR2/MFR1 was 0.055. The amount of the residue obtained after the dissolution in the 1-chloronaphthalene solvent was 1.8% by weight.

### [Reference Example 3] Preparation of PAS:A3

The PAS:A1 obtained in Reference Example 1 was oxidated under heat treatment at an oxygen concentration of 11% at 220°C for 12 hours. As a result of analysis of the PAS:A3 obtained, the weight average molecular weight Mw was found to be 49,000. When the cumulative integral value from the molecular weight of 100 to the molecular weight of 10,000 was taken as 100, the cumulative integrated value from the molecular weight of 100 to the molecular weight of 4,000 was calculated to be 49. In addition, MFR1 was 100 g/10 minutes, MFR2 was 7.5 g/10 minutes, and the rate of change represented by MFR2/MFR1 was 0.071. The amount of the residue obtained after the dissolution in the 1-chloronaphthalene solvent was 13% by weight.

### [Reference Example 4] Preparation of PAS:A'1

A PAS was produced in the same manner as in Reference Example 1 except that Step 3 in Reference Example 1 was not performed. As a result of analysis of the PAS:A'1 obtained, the weight average molecular weight Mw was found to be 39,000. When the cumulative integral value from the molecular weight of 100 to the molecular weight of 10,000 was taken as 100, the cumulative integrated value from the molecular weight of 100 to the molecular weight of 4,000 was calculated to be 54. MFR1 was 657 g/10 minutes, MFR2 was 41 g/10 minutes, and the rate of change represented by MFR2/MFR1 was 0.062. The amount of the residue obtained after the dissolution in the 1-chloronaphthalene solvent was 0.6% by weight.

### [Reference Example 5] Preparation of PAS:A'2

A PAS was obtained in the same manner as in Reference Example 1 except that Step 3 in Reference Example 1 was not performed. Then, the PAS was oxidated under heat treatment under conditions of an oxygen concentration of 2% at 220°C for 12 hours. As a result of analysis of the PAS:A'2 obtained, the weight average molecular weight Mw was found to be 44,000. When the cumulative integral value from the molecular weight of 100 to the molecular weight of 10,000 was taken as 100, the cumulative integrated value from the molecular weight of 100 to the molecular weight of 4,000 was calculated to be 54. In addition, MFR1 was 440 g/10 minutes, MFR2 was 30 g/10 minutes, and the rate of change represented by MFR2/MFR1 was 0.068. The amount of the residue obtained after the dissolution in the 1-chloronaphthalene solvent was 1.9% by weight.

### [Reference Example 6] Preparation of PAS:A'3

After the reaction in Reference Example 1 was completed, Step 1 was not performed. Then, Step 3 was repeated three times, and then, Step 2 in Reference Example 1 was performed to produce a PAS. As a result of analysis of the PAS:A'3 obtained, the weight average molecular weight Mw was found to be 42,000. When the cumulative integral value from the molecular weight of 100 to the molecular weight of 10,000 was taken as 100, the cumulative integrated value from the molecular weight of 100 to the molecular weight of 4,000 was calculated to be 42. In addition, MFR1 was 580 g/10 minutes, MFR2 was 72 g/10 minutes, and the rate of change represented by MFR2/MFR1 was 0.124. The amount of the residue obtained after the dissolution in the 1-chloronaphthalene solvent was 0.5% by weight.

### (B) Glass Fiber

B1: T-760H (chopped strand glass fiber) manufactured by Nippon Electric Glass Co., Ltd.

### (C) Non-fibrous Inorganic Filler

C1: KSS-1000 (heavy calcium carbonate) manufactured by Calfine Co., Ltd.

### (D) Organic Silane Coupling Agent Having Functional Group

D1: SH6040 (γ-glycidoxypropyltrimethoxysilane) manufactured by Toray Dow Co., Ltd.

D2: KBM-303 (2-(3,4-epoxycyclohexyl)ethyltrimethoxysilane) manufactured by Shin-Etsu Chemical Co., Ltd.

D3: KBE-903 (3-aminopropyltriethoxysilane) manufactured by Shin-Etsu Chemical Co., Ltd.

D4: KBE-9007N (3-isocyanatepropyltriethoxysilane) manufactured by Shin-Etsu Chemical Co., Ltd.

### [Evaluation Methods for PAS Composition Produced in Examples]

### (1) Tensile Strength

Pellets of a PAS resin composition according to the present invention were dried using a hot air dryer at 130°C for 3 hours, and then supplied into an injection molding machine (SE-50D) manufactured by Sumitomo Heavy Industries, Ltd., with the machine set at a cylinder temperature of 320°C and a mold temperature of 145°C. Using a mold in the shape of the type A1 test piece specified in ISO 20753 (2008), the pellets were injection-molded under the condition that the average rate of the molten resin passing through the cross-sectional area of the central parallel portion was 400 ± 50 mm/s. A test piece for evaluation was thus obtained. This test piece was conditioned under conditions of 23°C and a relative humidity of 50% for 16 hours. The tensile strength was measured under conditions of a grip-to-grip distance of 114 mm and a test rate of 5 mm/s according to the method in ISO 527-1,2.

### (2) Flexural Strength

Pellets of a PAS resin composition according to the present invention were dried using a hot air dryer at 130°C for 3 hours, and then supplied into an injection molding machine (SE-50D) manufactured by Sumitomo Heavy Industries, Ltd., with the machine set at a cylinder temperature of 320°C and a mold temperature of 145°C. Using a mold in the shape of the type A1 test piece specified in ISO 20753 (2008), the pellets were injection-molded under the condition that the average rate of the molten resin passing through the cross-sectional area of the central parallel portion was 400 ± 50 mm/s. A test piece was thus obtained. The central parallel portion of this test piece was cut out to obtain a type B2 test piece. This test piece was conditioned under conditions of 23°C and a relative humidity of 50% for 16 hours. The flexural strength was measured under conditions of a span of 64 mm, a test rate of 2 mm/s, and a temperature of 23°C according to the method in ISO 178(2010).

### (3) Weld Strength

Pellets of a PAS resin composition according to the present invention were dried using a hot air dryer at 130°C for 3 hours, and then supplied into an injection molding machine (SE-50D) manufactured by Sumitomo Heavy Industries, Ltd., with the machine set at a cylinder temperature of 320°C and a mold temperature of 145°C. Using a mold in the shape of the type A1-based weld test piece specified in ISO 20753 (2008), the pellets were injection-molded to obtain a test piece. This test piece was conditioned under conditions of 23°C and a relative humidity of 50% for 16 hours. The tensile strength was measured under conditions of a grip-to-grip distance of 114 mm and a test rate of 5 mm/s according to the method in ISO 527-1,2.

### (4) Tensile strength after PCT (pressure cooker test) treatment (moist heat resistance)

A type A1 test piece specified in ISO 20753 (2008) was obtained by injection molding under the same conditions as in the section (1). The test piece was subjected to PCT treatment under conditions of 121°C, 100%RH, and 2 atm for 100 hours, using a high accelerated stress test chamber (EHS-221M) manufactured by ESPEC Corp. The tensile strength of the test piece after the treatment was measured.

### (5) Spiral Flow Length

A spiral flow mold having a thickness of 1 mm (1 mmt) was used for molding under conditions of a cylinder temperature of 320°C, a mold temperature of 140°C, an injection rate of 230 mm/sec, an injection pressure of 98 MPa, an injection time of 5 sec, and a cooling time of 15 sec. The flow length (the unit: mm) was measured (the injection molding machine used: SE-30D manufactured by Sumitomo Heavy Industries, Ltd.). The larger the measured value, the better the flowability.

### (6) Weight Loss on Heating

Into an aluminum cup preliminarily heated at 330°C for 3 hours, 10 g of pellets of a PAS resin composition according to the present invention was weighed out, and heated using a hot air dryer at 320°C for 2 hours. Then, the PAS resin composition was taken out into a desiccator containing a drying agent, and cooled. The weight of the resulting material was weighed. The weight loss on heating was calculated as a weight percentage of a decrease in weight between before and after heating to the weight before heating.

### (7) Cooling Crystallization Temperature

Approximately 10 mg of pellets of a PAS resin composition according to the present invention was weighed out. Using a differential scanning calorimeter DSC-7 manufactured by PerkinElmer, U.S. LLC, the material was heated at a heating rate of 20°C/minute, kept at 340°C for 5 minutes, and then cooled at a rate of 20°C/minute to measure a crystallization peak (exothermic peak) temperature.

### [Examples 1 to 8 and Comparative Examples 1 to 6]

Using a twin-screw extruder (TEM-26SS; manufactured by Toshiba Machine Co., Ltd.; LID = 64.6) having an intermediate addition port having a diameter of 26 mm, with the cylinder temperature set at 310°C, (A) a PAS, (C) an inorganic filler, and (D) a silane coupling agent were dry-blended at the weight ratios shown in Table 1 and Table 2, added through the most upstream raw material supply inlet of the extruder, and made molten. (B) the glass fiber was supplied through the intermediate addition port at the weight ratio shown in Table 1 and Table 2, and melt-kneaded under conditions of an s/r rotational speed of 300 rpm and the total amount of discharge of 40 kg/hour to obtain resin composition pellets. The resin composition pellets obtained were subjected to the above-described injection molding to obtain various molded articles, which were evaluated in terms of tensile strength, flexural strength, weld strength, and tensile strength after PCT treatment. In addition, the spiral flow length, weight loss on heating, and cooling crystallization temperature were evaluated by the above-described methods. The results were as shown in Table 1 and Table 2.

**[Table 1]**

| | | | Example 1 | Example 2 | Example 3 | Example 4 | Example 5 | Example 6 | Example 7 | Example 8 |
|---|---|---|---|---|---|---|---|---|---|---|
| (A) | PAS Resin | Type | A1 | A1 | A2 | A3 | A2 | A2 | A2 | A2 |
| | | Parts by Weight | 100 | 100 | 100 | 100 | 100 | 100 | 100 | 100 |
| (B) | Glass Fiber | Type | B1 | B1 | B1 | B1 | B1 | B1 | B1 | B1 |
| | | Parts by Weight | 65 | 65 | 65 | 65 | 65 | 65 | 65 | 130 |
| (C) | Non-fibrous Inorganic Filler | Type | - | - | - | - | - | - | - | C1 |
| | | Parts by Weight | - | - | - | - | - | - | - | 60 |
| (D) | Organic Silan Coupling Agent Having Functional Group | Type | - | D1 | D1 | D1 | D2 | D3 | D4 | D4 |
| | | Parts by Weight | - | 0.5 | 0.5 | 0.5 | 0.5 | 0.5 | 0.5 | 0.5 |
| Properties | Tensile Strength | MPa | 152 | 167 | 190 | 185 | 181 | 191 | 195 | 141 |
| | Flexural Strength | MPa | 230 | 251 | 292 | 282 | 280 | 295 | 295 | 231 |
| | Weld Strength | MPa | 42 | 57 | 77 | 74 | 70 | 80 | 81 | 38 |
| | Tensile Strength After PCT Treatment | MPa | 140 | 145 | 153 | 140 | 143 | 165 | 170 | - |
| | Spiral Flow Length | mm | 151 | 130 | 115 | 101 | 116 | 115 | 113 | 95 |
| | Weight Loss on Heating | % | 0.25 | 0.30 | 0.23 | 0.21 | 0.22 | 0.26 | 0.19 | 0.20 |
| | Cooling Crystallization Temperature | °C | 217 | 216 | 227 | 230 | 227 | 225 | 226 | 224 |

**[Table 2]**

| | | | Comparative Example 1 | Comparative Example 2 | Comparative Example 3 | Comparative Example 4 | Comparative Example 5 | Comparative Example 6 |
|---|---|---|---|---|---|---|---|---|
| (A) | PPS Resin | Type Parts by Weight | A'1 | A'1 | A'2 | A'2 | A'3 | A'2 |
| | | | 100 | 100 | 100 | 100 | 100 | 100 |
| (B) | Glass Fiber | Type Parts by Weight | B1 | B1 | B1 | B1 | B1 | B1 |
| | | | 65 | 65 | 65 | 65 | 65 | 130 |
| (C) | Non-fibrous Inorganic Filler | Type Parts by Weight | - | - | - | - | - | C1 |
| | | | - | - | - | - | - | 60 |
| (D) | Organic Silan Coupling Agent Having Functional Group | Type Parts by Weight | - | D1 | D1 | D4 | D4 | D4 |
| | | | - | 0.5 | 0.5 | 0.5 | 0.5 | 0.5 |
| Properties | Tensile Strength | MPa | 140 | 156 | 174 | 178 | 194 | 125 |
| | Flexural Strength | MPa | 223 | 237 | 279 | 281 | 296 | 222 |
| | Weld Strength | MPa | 30 | 47 | 65 | 68 | 81 | 25 |
| | Tensile Strength After PCT Treatment | MPa | 121 | 120 | 129 | 141 | 159 | - |
| | Spiral Flow Length | mm | 150 | 132 | 116 | 115 | 90 | 96 |
| | Weight Loss on Heating | % | 0.31 | 0.44 | 0.29 | 0.26 | 0.19 | 0.26 |
| | Cooling Crystallization Temperature | °C | 211 | 211 | 213 | 215 | 220 | 218 |

The results of the above-described Examples 1 to 8 and Comparative Examples 1 to 6 will be described through comparison.

Example 1 was compared with Comparative Example 1, Examples 2 and 3 were compared with Comparative Examples 2 and 3, Example 7 was compared with Comparative Examples 4 and 5, and Examples 8 was compared with Comparative Example 6. In any of the Examples, use of the PAS has been found to improve the mechanical strength such as tensile strength, flexural strength, and weld strength, compared to the respective corresponding Comparative Examples, in which the PAS is a polyarylene sulfide characterized in that, when the cumulative integral value from the molecular weight of 100 to the molecular weight of 10,000 in a molecular weight distribution curve is taken as 100, the cumulative integrated value at the molecular weight of 4,000 is 48 to 53, and that, when the melt flow rate of the polyarylene sulfide is defined as MFR1, and when the melt flow rate obtained after mixing the polyarylene sulfide with an epoxy silane coupling agent at a weight ratio of 100:1, and heating the resulting mixture at 315.5°C for 5 minutes is defined as MFR2, the rate of change represented by MFR2/MFR1 is not more than 0.085. In addition, the tensile strength after the PCT treatment in Examples was maintained at a higher level than in Comparative Examples, so that the moist heat resistance was improved. Between Examples and Comparative Examples, the spiral flow length was substantially the same, meaning that the thin-wall moldability was maintained. In addition, the weight loss on heating was decreased in Examples, meaning that an effect for decreasing the mold deposits during continuous molding can also be achieved. Additionally, in Examples, the cooling crystallization temperature was higher than in Comparative Examples, and the crystallization rate was higher, thus revealing that the high-cycle moldability was excellent.

Example 7 and Comparative Example 5 were compared. In Comparative Example 5, the tensile strength, flexural strength, weld strength, and weight loss on heating were as excellent as in Example 7, but the tensile strength after PCT treatment was poorer, the spiral flow length was shorter, and the thin-wall moldability was poorer, than in the Example.

### Industrial Applicability

A PAS composition according to the present invention has excellent mechanical strength and moist heat resistance, also has improved moldability, and thus, can be utilized for various molded articles, such as automobile parts and electrical and electronic parts. The PAS is suitable particularly for a piping part for a fluid containing water as a major component.

## Claims

1. A polyarylene sulfide resin composition comprising:
100 parts by weight of (A) a polyarylene sulfide; and
10 to 200 parts by weight of (B) a glass fiber,
wherein, when the cumulative integral value from the molecular weight of 100 to the molecular weight of 10,000 in a molecular weight distribution curve of (A) the polyarylene sulfide is taken as 100, the cumulative integrated value at the molecular weight of 4,000 is 48 to 53, and
wherein, when the melt flow rate of (A) the polyarylene sulfide is defined as MFR1, and when the melt flow rate obtained after mixing (A) the polyarylene sulfide with an epoxy silane coupling agent at a weight ratio of 100:1, and heating the resulting mixture at 315.5°C for 5 minutes is defined as MFR2, the rate of change represented by MFR2/MFR1 is not more than 0.085.

2. The polyarylene sulfide resin composition according to claim 1, further comprising 10 to 250 parts by weight of (C) a non-fibrous inorganic filler with respect to 100 parts by weight of (A) the polyarylene sulfide.

3. The polyarylene sulfide resin composition according to claim 1 or 2, further comprising 0.1 to 10 parts by weight of (D) an organic silane coupling agent having at least one functional group selected from the group consisting of an epoxy group, an amino group, and an isocyanate group, with respect to 100 parts by weight of (A) the polyarylene sulfide.

4. The polyarylene sulfide resin composition according to claim 3, wherein the functional group of (D) the organic silane coupling agent is an amino group or an isocyanate group.

5. The polyarylene sulfide resin composition according to any one of claims 1 to 4, wherein (A) the polyarylene sulfide has a crosslinked structure.

6. The polyarylene sulfide resin composition according to claim 5, wherein, when (A) the polyarylene sulfide having a crosslinked structure is dissolved in a 20-fold weight of 1-chloronaphthalene at 250°C over a period of 5 minutes, and subjected to heat pressure filtration through a PTFE membrane filter having a pore size of 1 µm, the amount of the resulting residue is not more than 4.0% by weight.

7. A molded article composed of the polyarylene sulfide resin composition according to any one of claims 1 to 6.

8. The molded article according to claim 7, wherein the molded article is a fluid piping part through which a fluid containing water as a major component flows.
